# EUROPEAN PATENT APPLICATION

(11) **EP 4 712 369 A1**
(43) Date of publication of application: **18.03.2026**
(21) Application number: 24813733.3
(22) Date of filing: 04.02.2024
(51) Int. Cl.: H04B 10/58

(54) **SYSTEM, COMMUNICATION APPARATUS, OPTICAL MODULE, METHOD, AND OPTICAL NETWORK**

(30) Priority: 31.05.2023 CN 202310639070
(71) Applicant: Huawei Technologies Co., Ltd., Shenzhen, Guangdong 518129 (CN)
(72) Inventor: LI, Xinbai, Shenzhen, Guangdong 518129 (CN); ZHANG, Hui, Shenzhen, Guangdong 518129 (CN); LIU, Chenjun, Shenzhen, Guangdong 518129 (CN); WANG, Xiaodong, Shenzhen, Guangdong 518129 (CN); SHU, Qiang, Shenzhen, Guangdong 518129 (CN); HUANG, Huoqing, Shenzhen, Guangdong 518129 (CN); WANG, Wenyi, Shenzhen, Guangdong 518129 (CN)
(74) Representative: Epping - Hermann - Fischer
(86) International application number: PCT/CN2024/075707
(87) International publication number: WO 2024/244527

(57) **Abstract**

This application discloses a system, a communication apparatus, an optical module, a method, and an optical network. The system may include a communication apparatus and an optical module. The communication apparatus includes a control module and a service module. The optical module includes a storage unit and an optical transmitter unit. The storage unit may store nonlinear compensation information of a modulator in the optical transmitter unit. After the optical transmitter unit is directly connected to the service module, the control module may read the nonlinear compensation information from the storage unit, and configure a nonlinear compensation coefficient of the service module based on the nonlinear compensation information. The service module sends an electrical signal to the optical transmitter unit based on the configured nonlinear compensation coefficient. The modulator modulates an electrical signal obtained through nonlinear compensation into an optical signal. This helps compensate for nonlinear distortion introduced by the modulator to the signal.

## Description

This application claims priority to Chinese Patent Application No. 202310639070.0, filed with the China National Intellectual Property Administration on May 31, 2023 and entitled "SYSTEM, COMMUNICATION APPARATUS, OPTICAL MODULE, METHOD, AND OPTICAL NETWORK", which is incorporated herein by reference in its entirety.

### TECHNICAL FIELD

This application relates to the field of optical communication technologies, and in particular, to a system, a communication apparatus, an optical module, a method, and an optical network.

### BACKGROUND

The advent of the cloud era promotes the booming development of various Internet applications and greatly enriches lives of people. The exponential growth of network traffic poses higher requirements on the bandwidth, latency, power consumption, reliability, scalability, and flexibility of data centers.

In order to obtain high bandwidth, lower latency, and lower power consumption, an optical network is considered to be deployed in a data center. However, optical networks generally have high bit error rates caused by factors such as optical attenuation, dispersion, and nonlinearity. Exploring high-quality optical communication technologies is still challenging.

### SUMMARY

This application provides a system, a communication apparatus, an optical module, a method, and an optical network, to optimize performance of optical communication.

According to a first aspect, this application provides a system, where the system includes a communication apparatus and an optical module, the optical module includes a storage unit and an optical transmitter unit, the optical transmitter unit includes a modulator, and the optical transmitter unit is directly connected to the service module. The storage unit is configured to store nonlinear compensation information of the modulator. The communication apparatus is configured to obtain the nonlinear compensation information, perform nonlinear compensation on an electrical signal based on the nonlinear compensation information, and then send to the optical transmitter unit. The modulator is configured to modulate the electrical signal (or referred to as the electrical signal obtained through nonlinear compensation) input to the optical transmitter unit into an optical signal.

Because the communication apparatus may not be connected to an optical module during sales, a user may flexibly select an optical module according to a requirement. Nonlinear characteristics of different types of modulators generally differ greatly. The communication apparatus performs, based on the nonlinear compensation information that is of the modulator and that is stored in the optical module, nonlinear compensation on the electrical signal sent to the corresponding optical transmitter unit, instead of performing nonlinear compensation on the electrical signal based on the nonlinear compensation information pre-stored in the communication apparatus. This helps the communication apparatus more accurately compensate for nonlinear distortion caused by the modulator to the signal, thereby reducing a bit error rate of the signal and optimizing optical communication performance.

Optionally, the nonlinear compensation information indicates a value of a nonlinear compensation coefficient. The communication apparatus is configured to perform nonlinear compensation on an electrical signal based on the value of the nonlinear compensation coefficient, and then send to the optical transmitter unit. The value indicated by the nonlinear compensation information may be the value of the nonlinear compensation coefficient required by the modulator, and the value of the nonlinear compensation coefficient required by the modulator may be understood as the value of the nonlinear compensation coefficient for compensating for nonlinear distortion of the modulator.

Optionally, the nonlinear compensation information is used to determine the value of the nonlinear compensation coefficient. The communication apparatus is configured to determine the value of the nonlinear compensation coefficient based on the nonlinear compensation information, perform nonlinear compensation on the electrical signal based on the value of the nonlinear compensation coefficient, and then send to the optical transmitter unit. Because different types of modulators and different vendors generally have great impact on a nonlinear characteristic of electrical-to-optical conversion, the nonlinear compensation information may indicate a type of the modulator and/or a vendor of the optical module.

The value of the nonlinear compensation coefficient required by the modulator may be understood as the value of the nonlinear compensation coefficient for compensating for nonlinear distortion of the modulator. The performance of optical communication may include but is not limited to at least one of the following: signal quality, a bandwidth, a delay, and power consumption. The signal quality includes but is not limited to a bit error rate (bit error rate, BER) and a signal-to-noise ratio (signal-to-noise ratio, SNR).

The nonlinear compensation coefficient is used to affect linearity of the electrical signal obtained through nonlinear compensation. Optionally, the nonlinear compensation coefficient includes at least one of the following parameters of the electrical signal: a level amplitude, a relative amplitude of an inner eye and an outer eye, an eye skew, and an eye height; or the nonlinear compensation coefficient may include another parameter in addition to the foregoing parameters, and the another parameter may affect a value of the at least one parameter.

A structure of the communication apparatus is not limited in this application. Optionally, the communication apparatus includes a service module and a control module. The control module is configured to: obtain the nonlinear compensation information, and configure the nonlinear compensation coefficient of the service module based on the nonlinear compensation information. The service module is configured to perform nonlinear compensation on an electrical signal based on the configured nonlinear compensation coefficient, and then send to the optical transmitter unit. Optionally, in a process in which the control module configures the nonlinear compensation coefficient of the service module based on the nonlinear compensation information, the control module may adjust the value of the nonlinear compensation coefficient of the service module from a first value to a second value. When the nonlinear compensation information indicates the value (referred to as a target value) of the nonlinear compensation coefficient, the second value is not limited to be the same as the target value in this application. Optionally, the second value may be different from the target value, but a difference between the second value and the target value is less than a difference between the first value and the target value.

Optionally, that the optical transmitter unit is directly connected to the service module may indicate that the modulator is directly connected to the service module. Alternatively, the optical transmitter unit may include another unit or circuit in addition to a clock and data recovery (clock and data recovery, CDR) circuit. For example, the optical transmitter unit may further include a drive unit (or referred to as a drive circuit). That the optical transmitter unit is directly connected to the service module may indicate that the drive circuit is directly connected to the service module. The drive circuit is configured to perform amplification and/or shaping processing on the electrical signal obtained through nonlinear compensation, and then input to the modulator. The modulator is configured to modulate a processed electrical signal into an optical signal.

The optical module may include another unit or circuit in addition to the optical transmitter unit. For example, optionally, the optical module further includes an optical receiver unit. The optical receiver unit is configured to convert the received optical signal into an electrical signal, and then send to the communication apparatus (for example, the service module). The service module is configured to obtain data from the electrical signal obtained through conversion. Optionally, the optical receiver unit is directly connected to the service module. This helps reduce costs and power consumption of the optical module. Alternatively, optionally, the optical module further includes an optical digital signal processing ODSP unit, and the ODSP unit is directly connected to the service module. The optical receiver unit is configured to convert a received optical signal into an electrical signal, and then input to the ODSP unit. The ODSP unit is configured to perform clock and data recovery on the electrical signal, and then send to the service module. The service module is configured to obtain data from the electrical signal obtained through recovery. This helps reduce a bit error rate. The ODSP unit may include a CDR circuit, or the ODSP unit has a CDR function. According to a second aspect, this application provides a communication apparatus, where the communication apparatus is configured to directly connect to an optical transmitter unit in an optical module, the optical module includes a storage unit and the optical transmitter unit, the optical transmitter unit includes a modulator, and the storage unit stores nonlinear compensation information of the modulator. The communication apparatus is configured to obtain the nonlinear compensation information, perform nonlinear compensation on an electrical signal based on the nonlinear compensation information, and then send to the optical transmitter unit.

Because the communication apparatus may not be connected to an optical module during sales, after purchasing the communication apparatus, a user may purchase an optical module according to a requirement and connect the optical module to the communication apparatus. However, nonlinear characteristics of different types of modulators generally differ greatly. The communication apparatus performs, based on the nonlinear compensation information that is of the modulator and that is stored in the optical module, nonlinear compensation on the electrical signal sent to the optical transmitter unit, instead of performing nonlinear compensation on the electrical signal based on the information pre-stored in the communication apparatus. This helps the communication apparatus more accurately compensate for nonlinear distortion caused by the modulator to the signal, thereby reducing a bit error rate of the signal and optimizing optical communication performance.

Optionally, the nonlinear compensation information indicates a value of a nonlinear compensation coefficient. The communication apparatus is configured to perform nonlinear compensation on an electrical signal based on the value of the nonlinear compensation coefficient, and then send to the optical transmitter unit. The value indicated by the nonlinear compensation information may be the value of the nonlinear compensation coefficient required by the modulator, and the value of the nonlinear compensation coefficient required by the modulator may be understood as the value of the nonlinear compensation coefficient for compensating for nonlinear distortion of the modulator.

Optionally, the nonlinear compensation information is used to determine the value of the nonlinear compensation coefficient. The communication apparatus is configured to determine the value of the nonlinear compensation coefficient based on the nonlinear compensation information, perform nonlinear compensation on the electrical signal based on the value of the nonlinear compensation coefficient, and then send to the optical transmitter unit. Because different types of modulators and different vendors generally have great impact on a nonlinear characteristic of electrical-to-optical conversion, the nonlinear compensation information may indicate a type of the modulator and/or a vendor of the optical module.

The nonlinear compensation coefficient is used to affect linearity of the electrical signal obtained through nonlinear compensation. Optionally, the nonlinear compensation coefficient includes at least one of the following parameters of the electrical signal: a level amplitude, a relative amplitude of an inner eye and an outer eye, an eye skew, and an eye height; or the nonlinear compensation coefficient may include another parameter in addition to the foregoing parameters, and the another parameter may affect a value of the at least one parameter.

A structure of the communication apparatus is not limited in this application. Optionally, the communication apparatus includes a service module and a control module. The control module is configured to: obtain the nonlinear compensation information, and configure the nonlinear compensation coefficient of the service module based on the nonlinear compensation information. The service module is configured to perform nonlinear compensation on an electrical signal based on the configured nonlinear compensation coefficient, and then send to the optical transmitter unit. A structure of the optical module is not limited in this application. For example, the optical module may be any possible structure described in the first aspect.

According to a third aspect, this application provides an optical module, where the optical module includes a storage unit and an optical transmitter unit, the optical transmitter unit includes a modulator, and the optical transmitter unit is configured to directly connect to a communication apparatus. The storage unit is configured to store nonlinear compensation information of the modulator. The modulator is configured to modulate the electrical signal input to the optical transmitter unit into an optical signal. The electrical signal may be an electrical signal obtained through nonlinear compensation based on the nonlinear compensation information.

Because the communication apparatus may not be connected to an optical module during sales, after purchasing the communication apparatus, a user may purchase an optical module according to a requirement and connect the optical module to the communication apparatus. However, nonlinear characteristics of different types of modulators generally differ greatly. Therefore, the storage unit stores the nonlinear compensation information of the modulator, so that the communication apparatus obtains the nonlinear compensation information and performs, based on the nonlinear compensation information, more accurate nonlinear compensation on the electrical signal sent to the optical transmitter unit. The modulator modulates the electrical signal obtained through compensation into the optical signal. This helps reduce or even eliminate nonlinear distortion of the optical signal, thereby reducing a bit error rate of the signal and optimizing performance of optical communication.

The optical module may be configured to provide the nonlinear compensation information for the communication apparatus. The communication apparatus may be configured to perform nonlinear compensation on an electrical signal based on the nonlinear compensation information, and then send to the optical transmitter unit, where the electrical signal input to the optical transmitter unit may come from the communication apparatus.

Optionally, the nonlinear compensation information indicates a value of a nonlinear compensation coefficient. The communication apparatus is configured to perform nonlinear compensation on an electrical signal based on the value of the nonlinear compensation coefficient, and then send to the optical transmitter unit. The value indicated by the nonlinear compensation information may be the value of the nonlinear compensation coefficient required by the modulator, and the value of the nonlinear compensation coefficient required by the modulator may be understood as the value of the nonlinear compensation coefficient for compensating for nonlinear distortion of the modulator.

Optionally, the nonlinear compensation information is used to determine the value of the nonlinear compensation coefficient. The communication apparatus is configured to determine the value of the nonlinear compensation coefficient based on the nonlinear compensation information, perform nonlinear compensation on the electrical signal based on the value of the nonlinear compensation coefficient, and then send to the optical transmitter unit. Because different types of modulators and different vendors generally have great impact on a nonlinear characteristic of electrical-to-optical conversion, the nonlinear compensation information may indicate a type of the modulator and/or a vendor of the optical module.

The nonlinear compensation coefficient is used to affect linearity of the electrical signal obtained through nonlinear compensation. Optionally, the nonlinear compensation coefficient includes at least one of the following parameters of the electrical signal: a level amplitude, a relative amplitude of an inner eye and an outer eye, an eye skew, and an eye height; or the nonlinear compensation coefficient may include another parameter in addition to the foregoing parameters, and the another parameter may affect a value of the at least one parameter.

Optionally, that the optical transmitter unit is directly connected to the service module may indicate that the modulator is directly connected to the service module. Alternatively, the optical transmitter unit may include another unit or circuit in addition to a clock and data recovery (clock and data recovery, CDR) circuit. For example, the optical transmitter unit may further include a drive unit (or referred to as a drive circuit). That the optical transmitter unit is directly connected to the service module may indicate that the drive circuit is directly connected to the service module. The drive circuit is configured to perform amplification and/or shaping processing on the electrical signal obtained through nonlinear compensation, and then input to the modulator. The modulator is configured to modulate a processed electrical signal into an optical signal.

The optical module may include another unit or circuit in addition to the optical transmitter unit. For example, optionally, the optical module further includes an optical receiver unit. The optical receiver unit is configured to convert the received optical signal into an electrical signal, and then send to the communication apparatus (for example, the service module). The service module is configured to obtain data from the electrical signal obtained through conversion. Optionally, the optical receiver unit is directly connected to the service module. This helps reduce costs and power consumption of the optical module. Alternatively, optionally, the optical module further includes an optical digital signal processing ODSP unit, and the ODSP unit is directly connected to the service module. The optical receiver unit is configured to convert a received optical signal into an electrical signal, and then input to the ODSP unit. The ODSP unit is configured to perform clock and data recovery on the electrical signal, and then send to the service module. The service module is configured to obtain data from the electrical signal obtained through recovery. This helps reduce a bit error rate. The ODSP unit may include a CDR circuit, or the ODSP unit has a CDR function. A function or a structure of the communication apparatus is not limited in this application. For example, the communication apparatus may be any possible communication apparatus provided in the second aspect.

According to a fourth aspect, this application provides a method, where the method is applied to a system, and the system may be the system according to the first aspect. The system may include a communication apparatus and an optical module, the optical module includes a storage unit and an optical transmitter unit, the optical transmitter unit includes a modulator, the optical transmitter unit is directly connected to the service module, and the storage unit stores nonlinear compensation information of the modulator. The method may include: obtaining, by the communication apparatus, the nonlinear compensation information, performing nonlinear compensation on an electrical signal based on the nonlinear compensation information, and then sending to the optical transmitter unit. The modulator modulates the electrical signal (or referred to as the electrical signal obtained through nonlinear compensation) input to the optical transmitter unit into an optical signal.

Because the communication apparatus may not be connected to an optical module during sales, a user may flexibly select an optical module according to a requirement. Nonlinear characteristics of different types of modulators generally differ greatly. The communication apparatus performs, based on the nonlinear compensation information that is of the modulator and that is stored in the optical module, nonlinear compensation on the electrical signal sent to the optical transmitter unit, instead of performing nonlinear compensation on the electrical signal based on the nonlinear compensation information pre-stored in the communication apparatus. This helps more accurately compensate for nonlinear distortion caused by the modulator to the signal, thereby reducing a bit error rate of the signal and optimizing optical communication performance.

Optionally, the nonlinear compensation information indicates a value of a nonlinear compensation coefficient, or is used to determine the value of the nonlinear compensation coefficient. For meanings of the nonlinear compensation information and the nonlinear compensation coefficient, refer to related content in the first aspect for understanding.

The control module reads the nonlinear compensation information from the storage unit, and configures the nonlinear compensation coefficient of the service module based on the nonlinear compensation information. The service module performs nonlinear compensation on the electrical signal based on the configured nonlinear compensation coefficient, and then sends a nonlinear compensated electrical signal to the optical transmitter unit. The modulator modulates the electrical signal obtained through nonlinear compensation into the optical signal.

A structure of the communication apparatus is not limited in this application. Optionally, the communication apparatus includes the service module and the control module. Obtaining, by the communication apparatus, the nonlinear compensation information, performing nonlinear compensation on the electrical signal based on the nonlinear compensation information, and then sending to the optical transmitter unit may include: obtaining, by the control module, the nonlinear compensation information, and configuring the nonlinear compensation coefficient of the service module based on the nonlinear compensation information; and performing, by the service module, nonlinear compensation on the electrical signal based on the configured nonlinear compensation coefficient, and then sending to the optical transmitter unit.

A structure of the optical module is not limited in this application. That the optical transmitter unit is directly connected to the service module may indicate that the modulator is directly connected to the service module. Alternatively, the optical transmitter unit may include another unit or circuit in addition to a clock and data recovery (clock and data recovery, CDR) circuit. For example, the optical transmitter unit may further include a drive unit (or referred to as a drive circuit). That the optical transmitter unit is directly connected to the service module may indicate that the drive circuit is directly connected to the service module. Before modulating, by the modulator, the electrical signal obtained through nonlinear compensation into the optical signal, the method further includes: performing, by the drive circuit, amplification and/or shaping processing on the electrical signal obtained through nonlinear compensation, and then inputting to the modulator. Modulating, by the modulator, the electrical signal obtained through nonlinear compensation into the optical signal includes: modulating, by the modulator, the electrical signal that is obtained through amplification and/or shaping processing and that is obtained through nonlinear compensation into the optical signal.

The optical module may include another unit or circuit in addition to the optical transmitter unit. For example, optionally, the optical module further includes an optical receiver unit. The method further includes: converting, by the optical receiver unit, the received optical signal into an electrical signal, and then sending to the communication apparatus (for example, the service module); and obtaining, by the communication apparatus (for example, the service module), data from the electrical signal obtained through conversion.

Optionally, the optical receiver unit is directly connected to the communication apparatus (or the service module). This helps reduce costs and power consumption of the optical module. Alternatively, optionally, the optical module further includes an optical digital signal processing ODSP unit, and the ODSP unit is directly connected to the communication apparatus (or the service module). The optical receiver unit is configured to convert a received optical signal into an electrical signal, and then input to the ODSP unit. The ODSP unit is configured to perform clock and data recovery on the electrical signal, and then send to the communication apparatus (or the service module). The communication apparatus (or the service module) is configured to obtain data from the electrical signal obtained through recovery. This helps reduce a bit error rate. The ODSP unit may include a CDR circuit, or the ODSP unit has a CDR function.

The method provided in the fourth aspect may be the method running in the system provided in the first aspect. Therefore, for a technical effect that can be obtained by using the method provided in the fourth aspect, refer to the technical effect obtained by using the foregoing corresponding system example. Details are not described herein again.

According to a fifth aspect, this application provides a method, where the method is applied to a communication apparatus, and the communication apparatus may be the communication apparatus according to the second aspect. The communication apparatus is configured to directly connect to an optical transmitter unit in an optical module. The optical module includes a storage unit and the optical transmitter unit, the optical transmitter unit includes a modulator, and the storage unit stores nonlinear compensation information of the modulator. The method includes: obtaining, by the communication apparatus, the nonlinear compensation information, performing nonlinear compensation on an electrical signal based on the nonlinear compensation information, and then sending to the optical transmitter unit.

Optionally, the nonlinear compensation information indicates a value of a nonlinear compensation coefficient, or is used to determine the value of the nonlinear compensation coefficient. For meanings of the nonlinear compensation information and the nonlinear compensation coefficient, refer to related content in the first aspect for understanding.

Because the communication apparatus may not be connected to an optical module during sales, after purchasing the communication apparatus, a user may purchase an optical module according to a requirement and connect the optical module to the communication apparatus. However, nonlinear characteristics of different types of modulators generally differ greatly. The communication apparatus performs, based on the nonlinear compensation information that is of the modulator and that is stored in the optical module, nonlinear compensation on the electrical signal sent to the optical transmitter unit, instead of performing nonlinear compensation on the electrical signal based on the nonlinear compensation information pre-stored in the communication apparatus. This helps the communication apparatus more accurately compensate for nonlinear distortion caused by the modulator to the signal, thereby reducing a bit error rate of the signal and optimizing optical communication performance.

A structure of the communication apparatus is not limited in this application. Optionally, the communication apparatus includes the service module and the control module. Obtaining, by the communication apparatus, the nonlinear compensation information, performing nonlinear compensation on the electrical signal based on the nonlinear compensation information, and then sending to the optical transmitter unit may include: obtaining, by the control module, the nonlinear compensation information, and configuring the nonlinear compensation coefficient of the service module based on the nonlinear compensation information; and performing, by the service module, nonlinear compensation on the electrical signal based on the configured nonlinear compensation coefficient, and then sending to the optical transmitter unit.

A structure of the optical module is not limited in this application. For example, the optical module may be any possible structure described in the third aspect.

The method provided in the fifth aspect may be the method running in the communication apparatus provided in the second aspect. Therefore, for a technical effect that can be obtained by using the method provided in the fifth aspect, refer to the technical effect obtained by using the foregoing corresponding communication apparatus example. Details are not described herein again.

According to a sixth aspect, this application provides a method, where the method is applied to an optical module, and the optical module may be the optical module according to the third aspect. The optical module may include a storage unit and an optical transmitter unit. The optical transmitter unit includes a modulator. The optical transmitter unit is configured to directly connect to a communication apparatus (or a service module in the communication apparatus). The communication apparatus may be the communication apparatus according to the second aspect. The storage unit stores nonlinear compensation information of the modulator. The method includes: providing, by the optical module, the nonlinear compensation information for the communication apparatus, and then modulating an electrical signal input to the optical transmitter unit into an optical signal, where the electrical signal is an electrical signal obtained by performing nonlinear compensation based on the nonlinear compensation information.

In the process in which the optical module provides the nonlinear compensation information for the communication apparatus, the optical module may receive a read request sent by the communication apparatus, where the read request is used to request to read the nonlinear compensation information, and the optical module may read the nonlinear compensation information according to the read request and send the nonlinear compensation information to the communication apparatus. Alternatively, the optical module may actively send the nonlinear compensation information to the communication apparatus.

In the process in which the optical module provides the nonlinear compensation information for the communication apparatus, the storage unit may separately provide the nonlinear compensation information for the communication apparatus; or the optical module further includes a control unit, and the control unit and the storage unit jointly provide the nonlinear compensation information for the communication apparatus. For example, the control unit receives the read request, and reads the nonlinear compensation information from the storage unit according to the read request, and after the storage unit returns the nonlinear compensation information, the control unit sends the nonlinear compensation information to the communication apparatus.

Optionally, the optical transmitter unit may further include a drive circuit, and the drive circuit is directly connected to the communication apparatus (or the service module). Modulating, by the modulator, the electrical signal into the optical signal includes: performing, by the drive circuit, amplification and/or shaping processing on the electrical signal, and then inputting to the modulator; and modulating, by the modulator, an electrical signal obtained through amplification and/or shaping processing into the optical signal. The optical transmitter unit does not include a clock and data recovery (clock and data recovery, CDR) circuit.

Optionally, the optical module further includes an optical receiver unit, the optical receiver unit is directly connected to the service module, and the method further includes: converting, by the optical receiver unit, a received optical signal into an electrical signal, and then sending to the service module.

Optionally, the optical module further includes an optical receiver and an optical digital signal processing ODSP unit. The ODSP unit is directly connected to the service module. The method further includes: converting, by the optical receiver unit, a received optical signal into an electrical signal, and then inputting to the ODSP unit; and performing, by the ODSP unit, clock and data recovery on the electrical signal, and then sending to the service module.

The method provided in the sixth aspect may be the method running in the optical module provided in the third aspect. Therefore, for a technical effect that can be obtained by using the method provided in the sixth aspect, refer to the technical effect obtained by using the foregoing corresponding optical module example. Details are not described herein again.

This application does not limit implementations of the structures (for example, the communication apparatus, the module, or the unit) provided in the first aspect to the sixth aspect. Optionally, the structure may include a processor and a memory. The processor is configured to execute instructions stored in the memory, so that the structure performs any method procedure performed by the foregoing corresponding structure. Optionally, the structure may be a chip, and the chip includes one or more processors. A part or all of the processors are configured to read and execute a computer program stored in the memory, to perform any method procedure performed in the foregoing corresponding structure. The memory may be a memory inside a chip or a memory outside a chip.

According to a seventh aspect, this application provides an optical network, where the optical network may include a plurality of optical communication devices, and different optical communication devices in the plurality of optical communication devices are communicatively connected through an optical interconnection network. At least one optical communication device in the plurality of optical communication devices is the system according to the first aspect, or the system according to the first aspect is disposed in the at least one optical communication device. The optical interconnection network may include one or more optical links (for example, an optical fiber), and may further include one or more optical switching devices.

Different optical communication devices in the optical network may be deployed at different geographical locations, or different optical communication devices in the optical network may be deployed at a same geographical location. Optionally, the optical network further includes a cabinet, where the cabinet is configured to fasten each optical communication device and the optical interconnection network. Optionally, the optical network is located in a data center. According to an eighth aspect, this application provides a computer-readable storage medium, including instructions. When the instructions are run on a computer device, the computer device is enabled to perform any method described above, for example, perform the method described above performed by the control module, or perform the method described above performed by the service module, or perform the method described above performed by the communication apparatus, or perform the method described above performed in the system, or perform the method described above performed in the optical module.

According to a ninth aspect, a computer program product is provided. When the computer program product is run on a computing device, the computing device is enabled to perform any method described above, for example, perform the method described above performed by the control module, or perform the method described above performed by the service module, or perform the method described above performed in the communication apparatus, or perform the method described above performed in the system, or perform the method described above performed in the optical module.

The apparatuses provided in embodiments of this application may be configured to perform the foregoing corresponding example methods. Therefore, for technical effects that can be achieved by the apparatus examples in this application, refer to the technical effects achieved by the foregoing corresponding method examples. Details are not described herein again.

### BRIEF DESCRIPTION OF DRAWINGS

FIG. 1-1 and FIG. 1-2 each schematically show a possible structure of an optical network;
FIG. 2 schematically shows a possible structure of a system according to this application;
FIG. 3-1 to FIG. 3-4 schematically show several possible designs of an optical communication device;
FIG. 4-1 to FIG. 4-3 each schematically show an eye pattern of a signal;
FIG. 5 schematically shows a possible procedure of a method according to this application;
FIG. 6 to FIG. 8 schematically show another possible procedure of a method according to this application;
FIG. 9 schematically shows a possible structure of a communication apparatus according to this application; and
FIG. 10 schematically shows a possible structure of an optical module according to this application.

### DESCRIPTION OF EMBODIMENTS

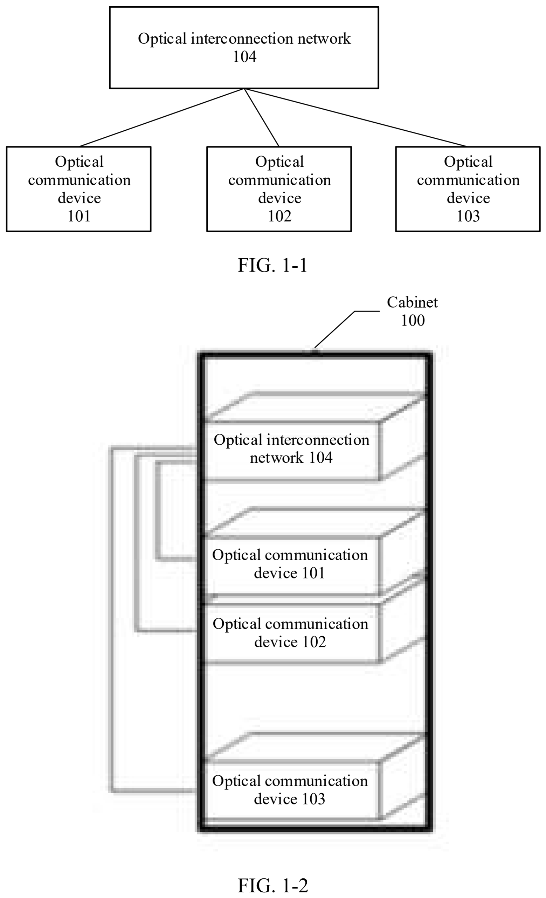

The solutions of this application may be applied to an optical network. Optical networks have advantages such as high switching speed, low optical power loss, low latency, low cost, and no wavelength competition. The optical network may be applied to a data center network (data center network, DCN), a metropolitan area network, a passive optical network (passive optical network, PON), an optical transport network (optical transport network, OTN), or the like. This is not specifically limited. FIG. 1-1 schematically shows a possible structure of an optical network. As shown in FIG. 1-1, the optical network includes but is not limited to an optical communication device 101, an optical communication device 102, an optical communication device 103, and an optical interconnection network 104, and optical signals may be transmitted between different optical communication devices through the optical interconnection network 104. The optical network may include more or fewer optical communication devices.

Devices or networks represented by different rectangular boxes in FIG. 1-1 may be deployed at different geographical locations or a same geographical location. For example, the optical network may be deployed in a single cabinet or a plurality of cabinets in a data center. FIG. 1-2 schematically shows a possible deployment manner of an optical network. As shown in FIG. 1-2, the optical network may be located in a cabinet 100 of the data center, and the cabinet 100 is configured to fasten the optical communication devices and the optical interconnection network. The optical interconnection network may include one or more optical links (for example, optical fibers). Optionally, the optical interconnection network may further include one or more optical switching devices, and the optical switching devices are configured to switch optical signals.

A type of the optical communication device is not limited in this application. For example, the optical communication device may be an optical line terminal (optical line terminal, OLT), an optical network unit (optical network unit, ONU), a router, a switch, a server, an OTN transport device, or a computer device.

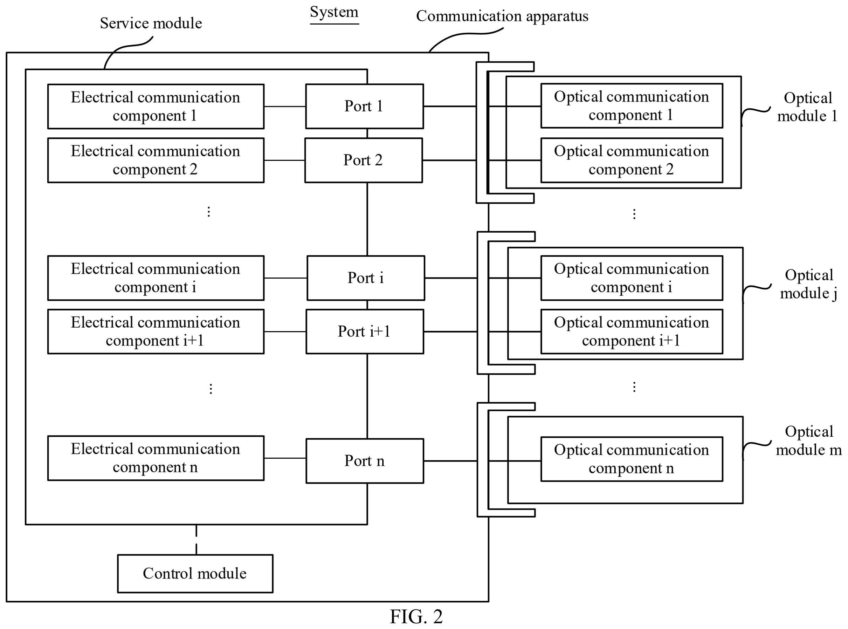

This application provides a system. The system may be the optical communication device shown in FIG. 1-1 or FIG. 1-2, or may be deployed in the optical communication device shown in FIG. 1-1 or FIG. 1-2. FIG. 2 schematically shows a possible structure of the system. As shown in FIG. 2, the system may include a communication apparatus and m optical modules (or referred to as optical interfaces), where m is a positive integer. The communication apparatus may be separately connected to the m optical modules. The system may send and/or receive an optical signal through the m optical modules. In some examples, the communication apparatus may be understood as an optical communication device into which no optical module is inserted.

The following uses an optical module j as an example to separately describe processes of sending an optical signal and receiving an optical signal through the optical module in the system, where j is a positive integer less than or equal to m.

In a process in which the system sends an optical signal through the optical module j, the communication apparatus may send an electrical signal to the optical module j, and the optical module j may convert the electrical signal into the optical signal, and send the optical signal, for example, send the optical signal to the optical interconnection network 104. The electrical signal sent by the communication apparatus to the optical module j may carry data. A source of the data is not limited in this application. For example, the data may be received by the communication apparatus from another device.

In a process in which the system receives an optical signal through the optical module j, the optical module j may convert the received optical signal into an electrical signal, and then send the electrical signal to the communication apparatus. For example, the optical module j may receive the optical signal from the optical interconnection network 104. The communication apparatus may receive the electrical signal from the optical module j, and obtain data from the electrical signal.

A structure of the communication apparatus is not limited in this application. For example, the communication apparatus may be implemented by using software, hardware, or a combination of software and hardware. FIG. 2 schematically shows a possible structure of a communication apparatus. As shown in FIG. 2, the communication apparatus may include but is not limited to a service module and a control module that are connected to each other. The service module may have a function of a service plane (or referred to as a data plane), and is configured to process data in the service plane or in-band data. Functions of the communication apparatus mentioned above may be performed by the service module. The control module has a function of a control plane, is configured to process data of the control plane or out-of-band data, and may control the service module. The following uses an example in which the communication apparatus includes the service module and the control module.

In FIG. 2, a solid connection line without an arrow represents a transmission channel on the data plane, and a dashed connection line without an arrow represents a transmission channel on the control plane. The control module may be further configured to connect to the optical module in the system. For brevity of the accompanying drawings, FIG. 2 does not show a connection line representing the connection relationship.

As shown in FIG. 2, n ports may be disposed for the service module, and the service module may be communicatively connected to the m optical modules through the n ports. A single optical module may be connected to one or more ports. For example, a single optical module may be connected to one port, two ports, four ports, eight ports, or 12 ports. Different optical modules may be connected to a same quantity of ports or different quantities of ports. It is assumed that a port i is a port connected to the optical module j, and the port i is configured to transmit one electrical signal (referred to as an electrical signal of the port i) between the service module and the optical module j.

In a process in which the communication apparatus sends an electrical signal to the optical module j, the service module may send the electrical signal to the port i, and the optical module j may receive the electrical signal through the port i. Similarly, in a process in which the optical module j sends an electrical signal to the service module, the optical module j may send the electrical signal to the port i, and the service module may receive the electrical signal through the port i, and obtain data from the electrical signal.

Still as shown in FIG. 2, the service module may be provided with one electrical communication component for each port. For example, the service module is provided with n electrical communication components, and an electrical communication component i corresponds to the port i. The electrical communication component is configured to send an electrical signal to a corresponding port. For example, the electrical communication component i may be configured to send an electrical signal to the port i. The electrical communication component is configured to receive an electrical signal from a corresponding port. For example, the electrical communication component i may further receive an electrical signal through the port i, and obtain data from the electrical signal.

An implementation of the electrical communication component is not limited in this application. For example, the electrical communication component may be implemented by using software, hardware, or a combination of software and hardware. An example is used below for description, and details are not described herein. Different electrical communication components are not limited to being independent of each other in this application. In some examples, the different electrical communication components may be integrated, or some functions or components of the different electrical communication components may be integrated.

Similarly, an optical communication component may be disposed for each port connected to the optical module j. As shown in FIG. 2, the optical module j may include an optical communication component i and an optical communication component i+1. The optical communication component may be configured to receive an electrical signal from a corresponding port. For example, the optical communication component i is configured to receive an electrical signal from the port i. The optical communication component may be configured to send an electrical signal to a corresponding port. For example, the optical communication component i is configured to send an electrical signal obtained through optical-to-electrical conversion to the port i.

An implementation of the optical communication component is not limited in this application. For example, the optical communication component may be implemented by using software, hardware, or a combination of software and hardware. An example is used below for description, and details are not described herein. Different optical communication components are not limited to being independent of each other in this application. In some examples, the different optical communication components may be integrated, or some functions or components of the different optical communication components may be integrated.

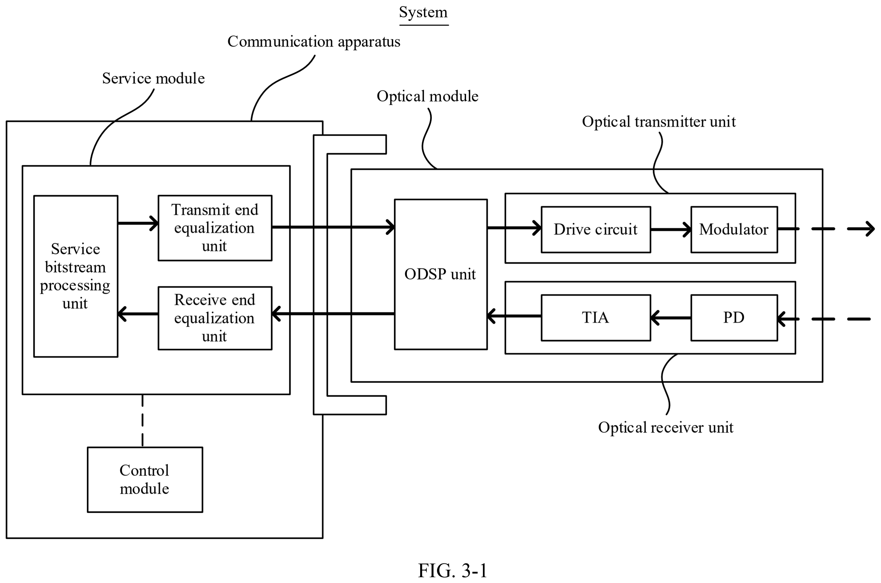

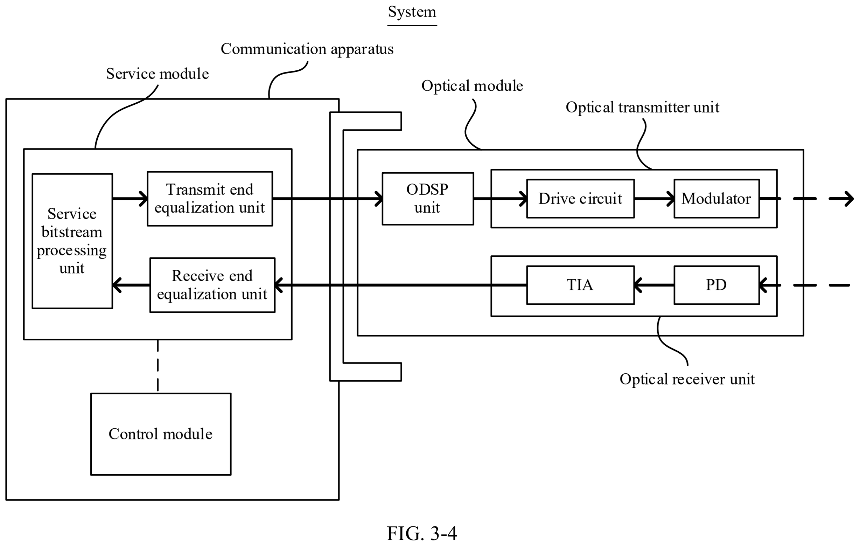

The following describes a structure of a service module and several possible designs of an optical module with reference to FIG. 3-1 to FIG. 3-4.

As shown in FIG. 3-1, in a first possible design of the optical module, the optical module includes but is not limited to an optical digital signal processor (optical digital signal processor, ODSP) unit, an optical transmitter unit, and an optical receiver unit.

The optical transmitter unit may include a drive circuit and a modulator. The drive circuit is configured to perform amplification and/or shaping on an electrical signal input to the optical transmitter unit, and then output to the modulator. The modulator is configured to modulate the input electrical signal into an optical signal.

A structure of the drive circuit is not limited in this application. For example, the drive circuit may include one or more amplifiers. A type of the modulator is not limited in this application. For example, the modulator may include a modulation circuit and a laser, where the modulation circuit is configured to control, based on the input electrical signal, the laser to output the optical signal; or the modulator is a laser with a built-in modulation function, to output the optical signal based on the input electrical signal. For example, the modulator may be any one of the following types of modulators: a Mach-Zehnder (Mach-Zehnder, MZ) modulator or an externally modulated laser (Externally Modulated Laser, EML), a directly modulated laser (Directly Modulated Laser, DML), and a vertical cavity surface emitting laser (Vertical Cavity Surface Emitting Laser, VCSEL).

The drive circuit is an optional circuit. For example, the optical transmitter unit may not include the drive circuit, and the optical transmitter unit may directly input the input electrical signal to the modulator. In some examples, the optical transmitter unit may further include another component or circuit in addition to the drive circuit and the modulator. However, the optical transmitter unit does not include a clock and data recovery (clock and data recovery, CDR) circuit. Optionally, the optical receiver unit includes an optical-to-electrical converter and an amplification circuit. The optical-to-electrical converter is configured to convert the received optical signal into the electrical signal, and the amplification circuit is configured to perform amplification and/or shaping on the electrical signal, and then output. A type of the optical-to-electrical converter is not limited in this application. In FIG. 3-1, an example in which the optical-to-electrical converter is a photodetector (photodetector, PD) is used. An implementation of the amplification circuit is not limited in this application. For example, the amplification circuit may include at least one of the following: a transimpedance amplifier (transimpedance amplifier, TIA), a filter, and an amplitude limiting amplifier. FIG. 3-1 uses the TIA as an example of the amplification circuit.

The amplification circuit is an optional circuit. For example, the optical receiver unit may not include the amplification circuit, and the optical receiver unit may directly output an electrical signal obtained through optical-to-electrical conversion. In some examples, the optical receiver unit may further include another component or circuit in addition to the optical-to-electrical converter and the amplification circuit. However, the optical receiver unit generally does not include a CDR.

The ODSP unit is configured to perform relaying (referred to as transmit end relaying) on the electrical signal sent by the service module, and then output to the optical transmitter unit, so as to reduce distortion or attenuation of an optical signal (or referred to as a transmitted signal) sent by the optical transmitter unit, and optimize signal sending performance of the system. The ODSP unit is configured to perform relaying (referred to as receive end relaying) on the electrical signals output by the optical receiver unit, and then send to the service module, so as to reduce distortion or attenuation of the electrical signals (or referred to as a received signal) received by the service module, and optimize signal receiving performance of the system. The ODSP unit includes a clock and data recovery (clock and data recovery, CDR) circuit.

For example, to reduce distortion of the transmitted signal caused by a nonlinear characteristic of the modulator, in a process of performing transmit end relaying on the electrical signal, the ODSP unit may perform nonlinear compensation on the electrical signal.

For example, to reduce distortion of the received signal, in a process of performing receive end relaying on the electrical signal, the ODSP unit may perform clock and data recovery processing on the electrical signal.

In a first possible design of the optical module, the ODSP in the optical module is directly connected to the service module (or referred to as a direct connection), or the optical transmitter unit and the optical receiver unit are separately connected to the service module through the ODSP unit.

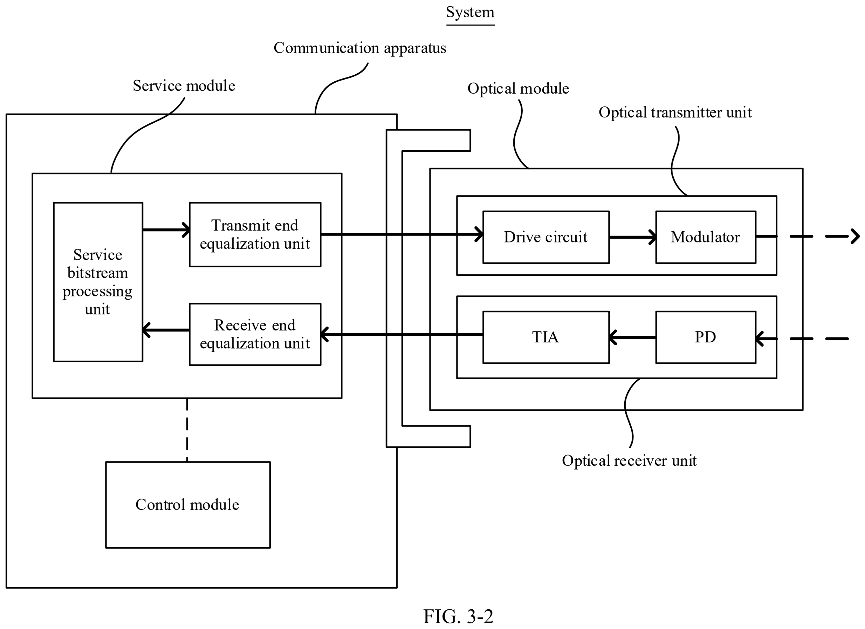

As shown in FIG. 3-2, in a second possible design of the optical module, the optical module includes but is not limited to an optical transmitter unit and an optical receiver unit. For the optical transmitter unit and the optical receiver unit, refer to related content in the first possible design of the optical module. Details are not described herein again. Different from the first possible design of the optical module, in the second possible design of the optical module, the optical module directly inputs a received electrical signal (for example, an electrical signal received from the service module) to the optical transmitter unit, and the optical module directly sends, to the service module, the electrical signal output by the optical receiver unit.

In a second possible design of the optical module, the optical transmitter unit and the optical receiver unit are separately directly connected to the service module, and the optical module may not include an ODSP unit.

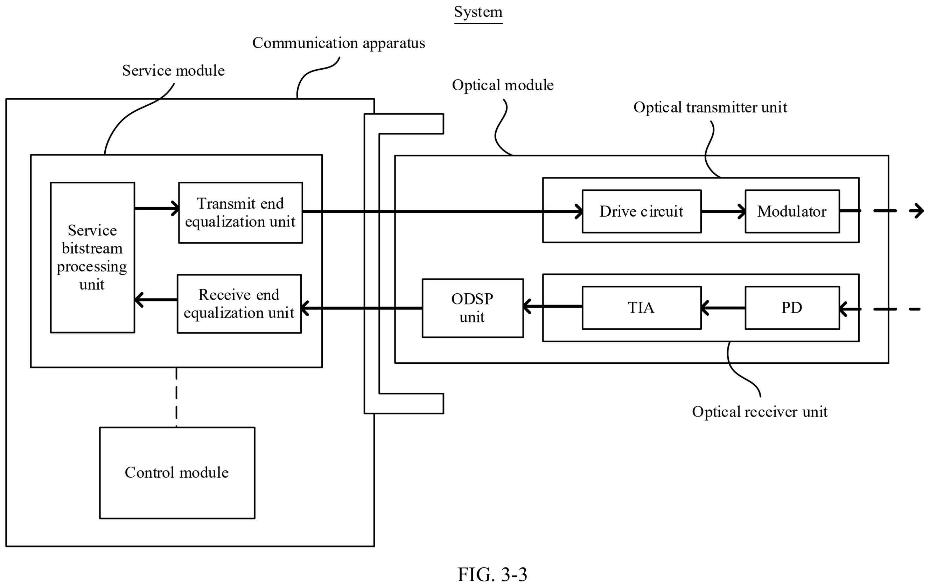

As shown in FIG. 3-3, in a third possible design of the optical module, the optical module includes but is not limited to an optical transmitter unit, an optical receiver unit, and an ODSP unit. For the optical transmitter unit and the optical receiver unit, refer to related content in the first possible design of the optical module. Details are not described herein again. Same as the first possible design of the optical module, in a third possible design of the optical module, the optical module inputs, to the ODSP unit, the electrical signal output by the optical receiver unit, performs receive end relaying on the electrical signal by using the ODSP unit, and then sends the relayed electrical signal to the service module. Different from the first possible design of the optical module, in the third possible design of the optical module, although the optical module includes the ODSP unit, after receiving the electrical signal sent by the service module, the optical module does not input the electrical signal to the ODSP unit, but directly inputs the electrical signal to the optical transmitter unit.

In a third possible design of the system, the optical transmitter unit is directly connected to the service module, and the optical receiver unit is connected to the service module through the ODSP unit.

As shown in FIG. 3-4, in a fourth possible design of the optical module, the optical module includes but is not limited to an ODSP unit, an optical transmitter unit, and an optical receiver unit. For the optical transmitter unit and the optical receiver unit, refer to related content in the first possible design of the optical module. Details are not described herein again. Same as the first possible design of the optical module, in the fourth possible design of the optical module, after receiving the electrical signal sent by the service module, the optical module inputs the electrical signal to the ODSP unit, and after performing transmit end relaying on the electrical signal by using the ODSP unit, the optical module inputs the electrical signal to the optical transmitter unit. Different from the first possible design of the optical module, in the third possible design of the optical module, although the optical module includes the ODSP unit, after the optical receiver unit outputs the electrical signal, the optical module does not input the electrical signal to the ODSP unit, but directly sends the electrical signal to the service module.

In a fourth possible design of the optical module, the optical transmitter unit is connected to the service module through the ODSP unit, and the optical receiver unit is directly connected to the service module.

For ease of distinguishing, in this application, the ODSP unit in the first possible design is referred to as a bidirectional ODSP unit, the ODSP unit in the third possible design is referred to as a receive end ODSP unit, and the ODSP unit in the fourth possible design is referred to as a transmit end ODSP unit.

Optionally, the optical module may include units in addition to the units shown in FIG. 3-1 to FIG. 3-4. For example, the optical module may further include a control unit and/or a storage unit. The storage unit is configured to read and/or write information. For example, the storage unit is configured to: in response to a request sent by the communication apparatus, read and send, to the communication apparatus, information stored in the storage unit. The control unit is configured to control other units in the optical module. For example, the control unit may configure a parameter of the optical transmitter unit and/or the optical receiver unit. For example, the control unit may control a read and/or write operation of the storage unit. For example, the control unit is configured to: in response to the request sent by the communication apparatus, read information from the storage unit, and send the information to the communication apparatus. A type of the storage unit is not limited in this application. Optionally, the storage unit is a storage unit in a chip, for example, a register or a cache. Alternatively, the storage unit may be a storage unit located outside the chip, for example, a read-only memory (read-only memory, ROM), an electrically erasable programmable read-only memory (electrically erasable programmable read-only memory, EEPROM), another type of static storage device that can store static information and instructions, or a random access memory (random access memory, RAM).

To optimize signal sending performance of the system, in a process in which the service module sends the electrical signal to the optical module, the service module may perform equalization processing on the electrical signal, and then send to the optical module. In this application, equalization processing performed by the service module on the electrical signal sent to the optical module is referred to as transmit end equalization.

Similarly, to optimize signal receiving performance of the system, in a process in which the service module receives the electrical signal sent by the optical module, the service module may perform equalization processing on the electrical signal, and obtain data from an electrical signal obtained through equalization processing. In this application, equalization processing performed by the service module on the electrical signal from the optical module is referred to as receive end equalization.

FIG. 3-1 to FIG. 3-4 schematically show a possible structure of the service module. Refer to the service module in any one of FIG. 3-1 to FIG. 3-4. The service module may include a service bitstream processing unit, a transmit end equalization unit, and a receive end equalization unit. The service bitstream processing unit is configured to encode data to obtain the electrical signal. The transmit end equalization unit is configured to perform transmit end equalization on the electrical signal output by the service bitstream processing unit, and then send an electrical signal obtained through transmit end equalization to the optical module through a corresponding port. The receive end equalization unit is configured to receive the electrical signal from the optical module through a corresponding port, and perform receive end equalization on the electrical signal.

The service bitstream processing unit is configured to decode an electrical signal obtained through receive end equalization to obtain data.

The transmit end equalization unit and the receive end equalization unit are not limited to being independent of each other in this application. In some examples, the transmit end equalization unit and the receive end equalization unit may be integrated, or some functions or components of the transmit end equalization unit and the receive end equalization unit may be integrated.

For brevity of the accompanying drawings, FIG. 3-1 to FIG. 3-4 show only one optical module in the system. The system may include more optical modules, and different optical modules in a same system may be optical modules described in the foregoing same design, or optical modules described in different designs.

In FIG. 3-1 to FIG. 3-4, an example in which the single optical module includes both the optical transmitter unit and the optical receiver unit is used. Optionally, the single optical module may include only the optical transmitter unit or include only the optical receiver unit. Similarly, the service module may include only the transmit end equalization unit or include only the receive end equalization unit.

FIG. 3-1 to FIG. 3-4 schematically show a scenario in which the service module and the optical module are connected through a single port. Each unit in the service module and the optical module shown in FIG. 3-1 to FIG. 3-4 may be understood as being separately disposed in the single electrical communication component and the single optical communication component that are connected through a same port and that are shown in FIG. 2. Optionally, in the system, the service module may be connected to the single optical module through more ports. Correspondingly, the service module and the optical module may respectively include an electrical communication component and an optical communication component that are corresponding to another port. A structure of the electrical communication component corresponding to the another port may include units in the service module shown in any one of FIG. 3-1 to FIG. 3-4. A structure of the optical communication component corresponding to the another port may include units in the optical module shown in any one of FIG. 3-1 to FIG. 3-4.

The single optical communication component is not limited to including both the optical transmitter unit and the optical receiver unit in this application. Optionally, the single optical communication component may include only the optical transmitter unit or include only the optical receiver unit. Similarly, the single electrical communication component may include only the transmit end equalization unit or include only the receive end equalization unit.

The service module may have a function of performing equalization processing (transmit end equalization or receive end equalization) on a signal as described above. In other words, the service module may include an equalization unit (for example, the transmit end equalization unit or the receive end equalization unit).

The equalization processing (or equalization unit) is configured to compensate for one or more channel distortions, so as to optimize communication performance between the system and a peer system. Channel distortion may include linear distortion and nonlinear distortion. A cause and a type of channel distortion are not limited in this application. For example, the foregoing channel distortion may include but is not limited to at least one of the following: a decrease in a data transmission rate caused by insufficient bandwidth of an optical component or fiber dispersion, signal distortion or signal attenuation caused by intersymbol interference or channel fading of a signal on a channel (for example, an optical fiber), and nonlinear distortion caused by the nonlinear characteristic of the modulator in the optical module.

A specific equalization processing method or an implementation of the equalization unit is not limited in this application, provided that the foregoing defect is compensated for. For example, the equalization unit may include one or more equalizers, and the one or more equalizers are configured to compensate for one or more of the foregoing defects. A single equalizer may be configured to compensate for one or more defects, and a single defect may be compensated for by using one or more equalizers.

For example, the equalization unit may be configured to perform filtering processing on the electrical signal, to remove interference information introduced in a signal transmission process. Correspondingly, the equalization unit may include an equalizer having a filtering function.

For example, the equalization unit may be configured to suppress intersymbol interference in the electrical signal, to improve a signal-to-noise ratio and reduce a bit error rate. Correspondingly, the equalization unit may include one or more equalizers for suppressing intersymbol interference. A type of the equalizer for suppressing intersymbol interference is not limited in this application. Optionally, the equalizer may suppress intersymbol interference through discrete convolution. For example, the equalizer may be a feed-forward equalizer (feed-forward equalization, FFE) or a decision feedback equalizer (decision feedback equalizer, DFE). Optionally, the equalizer may use a maximum likelihood sequence estimation algorithm to introduce intersymbol correlation during digital decision, and increase an amount of information for digital decision, thereby reducing a bit error rate. For ease of description, this type of equalizer is referred to as an estimation algorithm equalizer. Optionally, the equalizer may extract a low-frequency component through low-pass filtering, and then subtract the low-frequency component from an original signal, thereby suppressing low-frequency noise, improving a signal-to-noise ratio, and reducing a bit error rate. For ease of description, this type of equalizer is referred to as a low-frequency noise suppression equalizer.

For example, the equalization unit may be configured to change linearity of the electrical signal, to compensate for nonlinear distortion of the signal in a communication process, for example, compensate for nonlinear distortion generated due to the nonlinear characteristic of the modulator in the optical module. Correspondingly, the equalization unit may include an equalizer (referred to as a nonlinear equalizer) having a corresponding function. The linearity of the electrical signal may be represented by using at least one of the following parameters of an eye pattern of the electrical signal: a level amplitude, a relative amplitude of an inner eye and an outer eye, an eye skew, and an eye height.

For example, equalization processing may be used to change an amplitude of the electrical signal, to compensate for attenuation of the signal in the communication process. Correspondingly, the equalization unit may include an equalizer having a corresponding function. For example, the equalization unit includes a variable gain amplifier.

An implementation of the equalizer is not limited in this application, provided that the foregoing defect is compensated for. For example, the equalizer may be implemented by using software, hardware, or a combination of software and hardware. The equalizer is not limited to an independent circuit in this application. In some examples, different equalizers or equalizers may be integrated with another circuit. For example, the estimation algorithm equalizer and the low-frequency noise suppression equalizer may be integrated in a same circuit, for example, in a digital signal processor (digital signal processing, DSP).

In this application, a parameter in an equalization processing process or a parameter of an equalization unit is referred to as an equalization parameter. The control module may configure the equalization parameter of the service module, or in other words, the control module may write a value of the equalization parameter to the service module, to indicate the service module to perform equalization processing on the signal based on the configured equalization parameter. The service module may include a first type of equalization parameter. The first type of equalization parameter may affect the foregoing equalization processing process. For example, the equalization parameter may include or affect a parameter of an equalizer in the equalization unit, thereby helping to affect effect of equalization processing (for example, a compensation degree or compensation effect for channel distortion). The parameter of the equalizer may include but is not limited to at least one of the following: a tap type of the equalizer, an order of the equalizer, a switch status of the equalizer, a tap coefficient of the equalizer, and the like. A higher order of the equalizer generally indicates a stronger equalization processing capability, and better equalization processing effect, but lower power consumption. On the contrary, a lower order of the equalizer indicates a weaker equalization processing capability, poorer equalization processing effect, but lower power consumption. A larger quantity of enabled equalizers indicates a stronger equalization processing capability, better balancing processing effect, but lower power consumption. On the contrary, a smaller quantity of enabled equalizers indicates a weaker equalization processing capability, poorer equalization processing effect, but lower power consumption.

The service module may include a second type of equalization parameter. The second type of equalization parameter may affect a result of the foregoing equalization processing. For example, the equalization parameter may include or affect a quality parameter of an electrical signal output by an equalization unit or an equalizer, thereby affecting effect of equalization processing. The quality parameter may include but is not limited to linearity, an amplitude (or strength), a signal-to-noise ratio, a phase difference, a rate, and the like.

The service module may include a third type of equalization parameter. The third type of equalization parameter may affect both a process and a result of equalization processing, thereby affecting effect of equalization processing.

In this application, an equalization parameter that affects a transmit end equalization process and/or result is referred to as a transmit end equalization parameter, and the transmit end equalization parameter may affect performance of transmit end equalization processing. Refer to the service module shown in FIG. 3-1 to FIG. 3-4. The transmit end equalization parameter may be a parameter in the transmit end equalization unit. The transmit end equalization parameter may include at least one type of equalization parameter of the first type of equalization parameter, the second type of equalization parameter, and the third type of equalization parameter. For example, the at least one transmit end equalization parameter may include a nonlinear compensation coefficient. The nonlinear compensation coefficient may include or affect at least one of the following of the eye pattern of the electrical signal sent to the optical module: the level amplitude, the relative amplitude of the inner eye and the outer eye, the eye skew, and the eye height, to compensate for nonlinear distortion caused by the nonlinear characteristic of the modulator in the optical module.

In this application, an equalization parameter that affects a receive end equalization process and/or result is referred to as a receive end equalization parameter, and the receive end equalization parameter may affect performance of receive end equalization. Refer to the service module shown in FIG. 3-1 to FIG. 3-4. The receive end equalization parameter may be a parameter in the receive end equalization unit. The receive end equalization parameter may include at least one type of equalization parameter of the first type of equalization parameter, the second type of equalization parameter, and the third type of equalization parameter. For example, the at least one receive end equalization parameter may include or affect but is not limited to at least one of the following: a DSP order, an FFE order, or a DFE order. The DSP order may include an order of one or more equalizers in the DSP.

The foregoing describes a function of a service plane (or referred to as a data plane) of the system. The system may further have a function of a control plane. For example, the control module may be configured to process data of the control plane and control the service module. For example, the control module may configure an equalization parameter of the service module, to control an equalization processing process and/or result performed by the service module.

To promote wide application of optical communication technologies, this application provides a method for optimizing communication performance of the system. The idea of the method is as follows: The optical module may store configuration information, where the configuration information is related to impact of the optical module on signal quality, and may also indicate the equalization parameter of the connected service module; the optical module may provide the configuration information for the control module, and correspondingly the control module may obtain the configuration information, configure the equalization parameter of the service module based on the configuration information, and perform receive end equalization on the electrical signal obtained by the optical module through optical-to-electrical conversion, or perform transmit end equalization on the electrical signal sent to the optical module; and correspondingly the optical module converts the electrical signal obtained through transmit end equalization into the optical signal, to improve communication performance of the system.

For the optical module in the second possible design or the third possible design described above, the optical transmitter unit is configured to directly connect to the service module, and the modulator has the nonlinear characteristic. Therefore, after the service module sends the electrical signal to the optical transmitter unit, nonlinear distortion generally occurs to some extent in the optical signal sent by the optical transmitter unit.

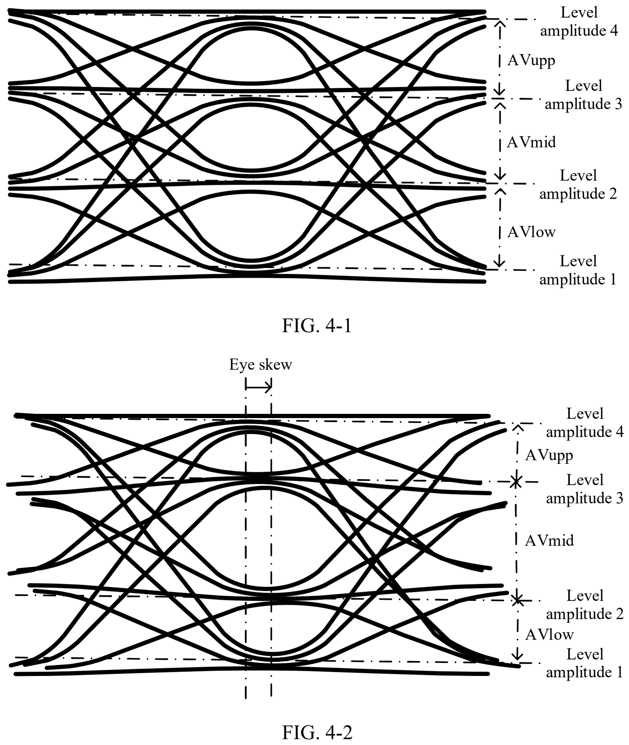

A type of the electrical signal sent by the service module to the optical transmitter unit is not limited in this application. For example, the electrical signal may be a PAM-N electrical signal, and N is a positive integer. An example in which the communication apparatus sends a pulse amplitude modulation 4 levels (pulse amplitude modulation 4 levels, PAM4) electrical signal to the optical module is used. FIG. 4-1 schematically shows an eye pattern (an electrical eye pattern for short) of the electrical signal, and FIG. 4-2 schematically shows an eye pattern (an optical eye pattern for short) of the optical signal output by the optical module. As shown in FIG. 4-1, a value of an amplitude (that is, AVmid) of an inner eye in the electrical eye pattern is equal to or approximately equal to a value of an amplitude (that is, AVlow or AVupp) of an outer eye, and a value of an eye skew (eye skew) is 0 or approximately 0. As shown in FIG. 4-2, a value of an amplitude of an inner eye in the optical eye pattern is greater than a value of an amplitude of an outer eye, and a value of an eye skew is greater than 0. In other words, compared with the electrical signal input to the optical module, nonlinear distortion occurs in the optical signal output by the optical module. Therefore, for the optical module in the second possible design or the third possible design described above, the optical module may store and provide the nonlinear compensation information of the modulator for the control module, so as to help receive an electrical signal obtained by performing nonlinear compensation based on the nonlinear compensation information. The modulator modulates the electrical signal obtained through compensation into the optical signal, so as to help compensate for nonlinear distortion in the optical signal. The nonlinear compensation information may be stored in the optical module before the optical module is delivered from a factory. The following describes the nonlinear compensation information of the modulator.

Optionally, the nonlinear compensation information stored in the optical module may indicate a value of the nonlinear compensation coefficient. The value of the nonlinear compensation coefficient indicated by the nonlinear compensation information of the modulator may be used to reduce or eliminate nonlinear distortion introduced by the modulator. A vendor can calibrate the value of the nonlinear compensation coefficient required by the modulator before the optical module is delivered. For example, the vendor of the optical module may store the value of the nonlinear compensation coefficient in the optical module based on a difference between the optical signal output by the optical module and an input electrical signal.

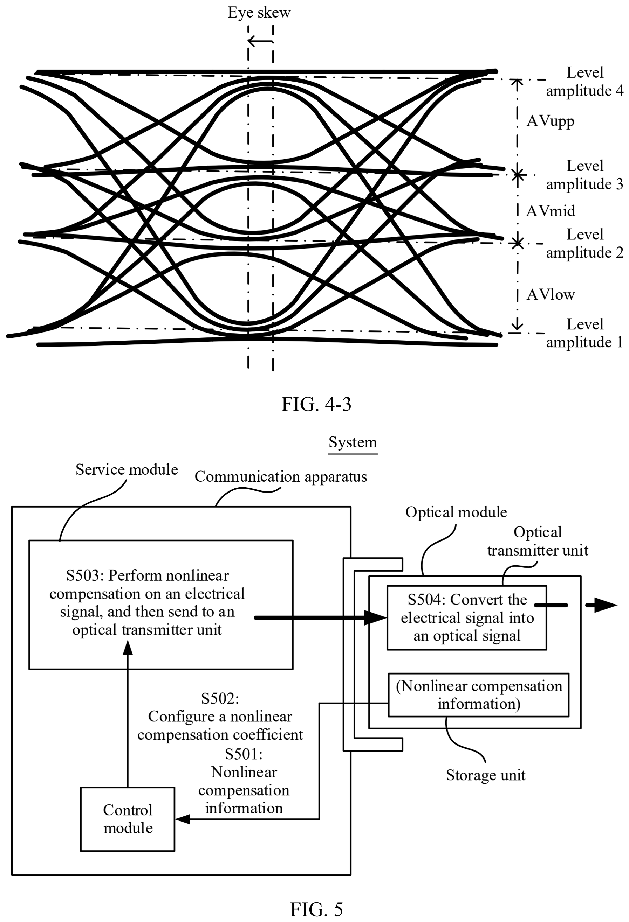

Based on the value of the nonlinear compensation coefficient, nonlinear compensation is performed on the electrical signal to be input to the optical transmitter unit, so as to help reduce or eliminate nonlinear distortion caused by the modulator to the signal. It is assumed that, after nonlinear compensation is performed on the electrical signal shown in FIG. 4-1 based on the value of the nonlinear compensation coefficient, the obtained eye pattern of the electrical signal obtained through nonlinear compensation (a compensated electrical eye pattern for short) is shown in FIG. 4-3. As shown in FIG. 4-3, a value of an amplitude of an inner eye in the compensated electrical eye pattern is less than a value of an amplitude of an outer eye, and a value of an eye skew is less than 0. In other words, a process of performing nonlinear compensation on the electrical signal based on the nonlinear compensation coefficient is equivalent to introducing nonlinear distortion into the electrical signal, and nonlinear distortion is used to compensate for nonlinear distortion introduced by the modulator, so as to eliminate or reduce nonlinear distortion of the optical signal output by the modulator. For example, a parameter of the eye pattern of the optical signal output by the modulator is the same as or similar to a parameter of the electrical eye pattern shown in FIG. 4-1.

A type of the nonlinear compensation coefficient is not limited in this application. For example, the nonlinear compensation coefficient includes at least one of the following parameters of the electrical signal: a relative amplitude of an inner eye and an outer eye, a level amplitude, an eye skew, and an eye height. Optionally, the electrical signal is an electrical signal obtained through nonlinear compensation. The following describes these parameters.

Optionally, the nonlinear compensation coefficient may include the relative amplitude of the inner eye and the outer eye. As shown in FIG. 4-1, an amplitude of the inner eye may be AVmid, and an amplitude of the outer eye may be AVupp or AVlow. AVlow, AVmid, and AVupp respectively represent a difference between a value of a level amplitude 4 and a level amplitude 3, a difference between a value of the level amplitude 3 and a level amplitude 2, and a difference between a value of the level amplitude 2 and a level amplitude 1. In this case, the value of the relative amplitude of the inner eye and the value of the relative amplitude of the outer eye are used to represent a difference between the amplitude of the inner eye and the amplitude of the outer eye. For example, the value of the relative amplitude of the inner eye and the value of the relative amplitude of the outer eye may include AVmid/AVupp and/or AVmid/AVlow.

Optionally, the nonlinear compensation coefficient may include a level amplitude of the electrical signal. The value of the level amplitude of the PAM-N electrical signal may include an absolute value or a relative value of at least one of N level amplitudes of the PAM-N electrical signal. Using a PAM4 electrical signal as an example, the PAM4 electrical signal generally has four level amplitudes (for example, level amplitudes 1 to 4 shown in FIG. 4-1), and a value of the level amplitude of the PAM4 electrical signal may include a value of each of the four level amplitudes. For example, for a 7-bit memory, an absolute value of a level amplitude of a PAM4 electrical signal may be [-63, -10, +10, +63], and a relative value of the level amplitude of the electrical signal may be [-1, -0.2, +0.2, +1].

Because a highest level (namely, the level amplitude 4) and a lowest level (namely, the level amplitude 1) in the four levels usually correspond to a maximum amplitude of the electrical signal that can be output by the service module, the value of the level amplitude of the PAM4 electrical signal may be simplified to include absolute values of two middle level amplitudes, for example, [-10, +10], or include relative values of two middle level amplitudes, for example, [-0.2, +0.2].

The level amplitude 1 and the level amplitude 4 are not limited to being opposite numbers to each other in this application, and the level amplitude 2 and the level amplitude 3 are opposite numbers to each other. When it is considered that the level amplitude 1 and the level amplitude 4 are opposite numbers to each other, and the level amplitude 2 and the level amplitude 3 are opposite numbers to each other, the absolute value of the level amplitude of the electrical signal may be further simplified to +20, or the relative value of the level amplitude of the electrical signal may be simplified to +0.2. The foregoing uses an example to describe a possible data format of the value of the level amplitude, but is not intended to limit the protection scope of this application. Another data format that can be used to determine the value of the level amplitude also falls within the protection scope of this application.

Optionally, the nonlinear compensation coefficient may include an eye skew or an eye skew compensation amount (eye skew). As shown in FIG. 4-2 or FIG. 4-3, a difference between an eye midpoint at the highest level and an eye midpoint at the lowest level may be used as a physical quantity of the eye skew. The eye skew has a time dimension, and may be stored in a form of an absolute value or a relative value. For example, it is assumed that the absolute value of the eye skew is 3 ps. The relative value of the eye skew may be a relative value of the eye skew and a signal cycle. Assuming that the absolute value of the eye skew and the cycle are 3 ps and 1/53 G respectively, the relative value of the eye skew may be 0.16 UI (unit interval). Because the eye skew (for example, as shown in FIG. 4-2) of the optical eye pattern is generally a rightward eye skew or indicates that the value of the eye skew is greater than 0, the eye skew (for example, as shown in FIG. 4-3) of the equalized electrical eye pattern is generally a leftward eye skew or indicates that the value of the eye skew is less than 0. To save a storage space, a field for indicating an eye skew direction or a positive or negative field may be omitted from the value of the eye skew stored in the optical module.

Optionally, the nonlinear compensation coefficient may include the eye height. The eye height may indicate a distance between an upper edge and a lower edge in the eye pattern, and represents an amplitude range of the signal. In other words, the eye height represents an amplitude or a peak-to-peak value of the electrical signal output by the service module or the transmit end equalization module. The value of the eye height may be an absolute value of the eye height, or the value of the eye height may be a relative value between the absolute value of the eye height and the foregoing maximum amplitude. The value of the eye height may be included in the value of the level amplitude of the electrical signal, or may be separately stored and transferred.

A manner in which the optical module stores the value of the nonlinear compensation coefficient is not limited in this application. To facilitate the communication apparatus to obtain values of nonlinear compensation coefficients from different types of optical modules, for different types of optical modules, the values of the nonlinear compensation coefficients may be stored at a same storage address (referred to as a first storage address) of the storage unit. The following uses an example to describe a manner in which the optical module stores the value of the nonlinear compensation coefficient.

For example, the first storage address includes a plurality of discontinuous storage locations.

The nonlinear compensation coefficient may include values of a plurality of parameters of the eye pattern, and the values of the different parameters are separately stored at different storage locations of the storage unit. The storage location of the storage unit may include two fields: a page (Page) field and a bytes (Bytes) field. A suffix h of a value of the page field represents hexadecimal, that is, 19h represents a hexadecimal number 19. For example, the value of the level amplitude of the electrical signal may be stored at Page 19h, Bytes 144-148 of the storage unit. The value of the eye skew may be stored at Page 2Fh, Bytes 146-148. The value of the eye height may be stored at Page 2Fh, Bytes 149-150.

For example, the first storage address is a continuous storage space in the storage unit.

The nonlinear compensation coefficient may include values of a plurality of parameters of the eye pattern, and the values of the plurality of parameters are stored at a same storage location of the storage unit. The same storage location of the storage unit may indicate a continuous storage space in the storage unit. For example, the value of the level amplitude, the value of the eye skew, and the value of the eye height of the electrical signal are stored at Page 19h, Bytes 144. It is feasible for a case in which a quantity of data bits is small.

Optionally, for different types of optical modules, the first storage address may store a same type of nonlinear compensation coefficient. Alternatively, optionally, for different types of optical modules, the first storage address may store different types of nonlinear compensation coefficients. Different types of optical modules may indicate different types of modulators in the optical modules. For example, when the modulator type is VCSEL, the value of the eye skew is stored at Page 19h, Bytes 144-148; or when the modulator type is not VCSEL, the value of the level amplitude of the electrical signal is stored at the storage location.

If the optical module does not store the value of the nonlinear compensation coefficient, the information stored at the first storage address in the storage unit of the optical module may be a default value, for example, 0.

Optionally, the nonlinear compensation information stored in the optical module may be used to determine the value of the nonlinear compensation coefficient. The control module may configure the nonlinear compensation coefficient of the service module based on the nonlinear compensation information.

Optionally, the nonlinear compensation information may indicate a value (referred to as a value of a first nonlinear compensation coefficient) of a compensation coefficient that is used to affect linearity of the electrical signal. A type of the first nonlinear compensation coefficient may be different from a type of a nonlinear compensation coefficient actually adjusted by the control module, provided that after the control module configures the nonlinear compensation coefficient of the service module based on the nonlinear compensation information, the value of the first nonlinear compensation coefficient of the electrical signal sent by the service module to the optical module is closer to the value of the first nonlinear compensation coefficient indicated by the nonlinear compensation information.

Different types of modulators and different vendors generally have great impact on a nonlinear characteristic of electrical-to-optical conversion. For example, for the MZ, the value of the relative amplitude of the inner eye and the outer eye in the eye pattern of the optical signal output by the MZ is small, and the value of the eye skew is small. For the EML, the value of the relative amplitude of the inner eye and the outer eye in the eye pattern of the optical signal output by the EML is large, and the value of the eye skew is small. For the VCSEL, the value of the relative amplitude of the inner eye and the outer eye in the eye pattern of the optical signal output by the VCSEL is small, and the value of the eye skew is large.

Therefore, to facilitate the communication apparatus connected to the optical module to compensate for nonlinear distortion of the optical module, optionally, the nonlinear compensation information stored in the optical module may be information of the optical module, where the information of the optical module indicates the modulator type of the optical module and/or vendor information of the optical module, and the like.

For example, the information of the optical module may include an index value of the modulator type and/or an index value of the vendor information of the optical module. The index value of the modulator type is used to determine one modulator type from a plurality of modulator types, and the index value of the vendor information is used to index one or more pieces of vendor information from the plurality of pieces of vendor information.

A manner in which the optical module stores the information of the optical module is not limited in this application. To facilitate the communication apparatus to obtain the information of the optical module from different types of optical modules, for different types of optical modules, the information of the optical module may be stored at a same storage address (referred to as a second storage address) of the storage unit. The following uses an example to describe a manner in which the optical module stores the information of the optical module.

The optical module may store the index value of the modulator type in the storage unit according to related specifications of the common management interface specification (common management interface specification, CMIS) international standard. For example, a storage location Page 00H Byte 147 in the storage unit is configured to store the index value of the modulator type. In addition, when the index value is 0110b, the modulator type indicated by the index value is 1310nm EML; when the index value is 0000b, the modulator type indicated by the index value is 850nm VCSEL; and when the index value is 1000b, the modulator type indicated by the index value is an MZ modulator. Because the optical module does not need to store the required value of the nonlinear compensation coefficient at a specified storage location in a specified format, adaptability of the optical module can be improved without relying on an international standard and without cooperation of the optical module with the communication apparatus.

As shown in FIG. 2, the optical module may include one or more optical communication components, and each optical communication component includes one optical transmitter unit. When the optical module includes a plurality of optical communication components, the optical module may store the nonlinear compensation information of the modulator in each optical communication component. When different optical communication components include modulators of a same type, to save a storage space, the nonlinear compensation information that is of the single modulator and that is stored in the optical module may be used to represent the nonlinear compensation information of the modulators in the plurality of optical communication components.

On the basis that the storage unit of the optical module stores the nonlinear compensation information of the modulator, the following describes a method provided in this application. The method may be applied to any system described above. As shown in FIG. 5, the method may include S501 to S504. In FIG. 5, a bold solid line with an arrow represents transmission of an electrical signal of a data plane, a bold dashed line with an arrow represents transmission of an optical signal of a data plane, and a non-bold solid line with an arrow represents transmission of an electrical signal of a control plane.

S501: The control module reads the nonlinear compensation information of the modulator from the storage unit of the optical module.

On the basis that the storage unit of the optical module stores the nonlinear compensation information described above, the optical module may provide the nonlinear compensation information for the control module. Correspondingly, the control module may obtain the nonlinear compensation information.

As shown in FIG. 2, assuming that the optical module is connected to the service module through the port i, the control module may read the nonlinear compensation information of the modulator of the optical transmitter unit in the optical communication component i from the optical module. A specific process in which the optical module provides the nonlinear compensation information for the control module or the control module obtains the nonlinear compensation information from the optical module is not limited in this application. For example, the control module may obtain the nonlinear compensation information of the modulator at the first storage location described above, or the optical module may actively send the nonlinear compensation information to the control module.

An occasion at which the control module obtains the nonlinear compensation information from the optical module is not limited in this application. For example, after the optical module is connected to the port i of the service module, the control module may perform S501.

S502: The control module configures the nonlinear compensation coefficient of the service module based on the nonlinear compensation information.

After obtaining the nonlinear compensation information, the control module may configure the nonlinear compensation coefficient of the service module based on the nonlinear compensation information, so as to eliminate or reduce nonlinear distortion introduced by the modulator of the optical module to the sent signal.

As described above, optionally, the nonlinear compensation information may indicate a value of the nonlinear compensation coefficient, and the control module may write, to the service module, the value of the nonlinear compensation coefficient indicated by the nonlinear compensation information. As shown in FIG. 2, the control module may write the value of the nonlinear compensation coefficient into the electrical communication component i. As shown in FIG. 3-2 or FIG. 3-3, the control module may write the value of the nonlinear compensation coefficient into the transmit end equalization unit in the electrical communication component i.

As described above, optionally, the nonlinear compensation information may include the information of the optical module. The information of the optical module may indicate the type of the modulator and/or the vendor information of the optical module. The control module may determine the value of the nonlinear compensation coefficient based on the information of the optical module, and then write the value of the nonlinear compensation coefficient into the service module.

A specific implementation in which the control module determines the value of the nonlinear compensation coefficient based on the information of the optical module is not limited in this application. For example, the control module may obtain a coefficient table, where the coefficient table stores the information of the optical module and the value of the nonlinear compensation coefficient in an associated manner, and the control module determines the value of the nonlinear compensation coefficient by looking up the table. For example, the control module may input the information of the optical module to an algorithm, where the algorithm may output the value of the nonlinear compensation coefficient. An implementation of the algorithm is not limited in this application. For example, the algorithm may be a trained machine learning algorithm.

The values of the nonlinear compensation coefficients determined by the control module are generally different when the information of the optical module is different. As described above, the nonlinear compensation coefficient may include or be used to affect one or more parameters of the eye pattern of the electrical signal sent by the service module (or the transmit end equalization unit) to the optical transmitter unit. Table 1 schematically shows differences between parameter values of electrical eye patterns determined by the control module based on different types of modulators. For ease of description, a parameter value of an electrical eye pattern determined based on a modulator type is referred to as a parameter value of an electrical eye pattern corresponding to the modulator type. As shown in Table 1, because a nonlinear compensation requirement of the EML for the level amplitude of the electrical signal is greater than a requirement of the MZ or the VCSEL, the value of the amplitude of the inner eye/the amplitude of the outer eye corresponding to the EML is greater than the value of the amplitude of the inner eye/the amplitude of the outer eye corresponding to the MZ or the VCSEL. As shown in Table 1, because a nonlinear compensation requirement of the VCSEL for the eye skew is greater than a requirement of the MZ or the EML, the value of the eye skew corresponding to the VCSEL is greater than the value of the eye skew corresponding to the MZ or the EML.

**Table 1**

| Modulator type | Amplitude of an inner eye/Amplitude of an outer eye | Eye skew |
|---|---|---|
| MZ | Small | Small |
| EML | Large | Small |
| VCSEL | Small | Large |

S503: The service module performs nonlinear compensation on the electrical signal based on the configured nonlinear compensation coefficient, and then sends to the optical transmitter unit.

After the control module configures the nonlinear compensation coefficient of the service module, the service module may perform nonlinear compensation on the electrical signal based on the configured nonlinear compensation coefficient, and then send an electrical signal obtained through nonlinear compensation to the optical transmitter unit.

After the control module writes the value of the nonlinear compensation coefficient into the transmit end equalization unit in the electrical communication component i, the transmit end equalization unit may perform nonlinear compensation on the input electrical signal based on the configured nonlinear compensation coefficient, and then send to the optical transmitter unit in the optical communication component i through the port i.

It is assumed that the eye pattern of the electrical signal on which nonlinear compensation is not performed is shown in FIG. 4-1, and the eye pattern of the electrical signal obtained through nonlinear compensation is shown in FIG. 4-3.

S504: The optical transmitter unit converts the input electrical signal into the optical signal. After the optical transmitter unit receives the electrical signal obtained through nonlinear compensation, the electrical signal may be converted into the optical signal.

The optical module may be shown in FIG. 3-2 or FIG. 3-3. After receiving the electrical signal through the port i, the optical module does not process the electrical signal through the ODSP unit, but directly inputs the electrical signal to the optical transmitter unit of the optical communication component i.

Refer to the foregoing description of the optical transmitter unit. The optical transmitter unit may include the drive circuit and the modulator. After the optical transmitter unit receives the electrical signal obtained through nonlinear compensation, the drive circuit may perform amplification and/or shaping processing on the electrical signal obtained through nonlinear compensation, and then input to the modulator. The modulator may modulate the input electrical signal into the optical signal.

Refer to the foregoing description of the optical transmitter unit. The optical transmitter unit may include the modulator, and does not include the drive circuit. After the optical transmitter unit receives the electrical signal obtained through nonlinear compensation, the modulator may modulate the electrical signal obtained through nonlinear compensation into the optical signal. Optionally, the optical module may further include the optical receiver unit. In the method corresponding to FIG. 5, the process in which the communication apparatus receives the signal through the optical module is not limited in this application. Optionally, the optical module does not include the optical receiver unit, and the communication apparatus sends a signal only through the optical module, but does not receive a signal through the optical module.

Because the service module of the communication apparatus is generally not connected to the optical module during sales of the communication apparatus, after purchasing the communication apparatus, a user may purchase an optical module according to a requirement and connect the optical module to the service module. Therefore, the control module configures the nonlinear compensation coefficient of the service module based on the compensation information that is of the modulator and that is stored in the optical module, instead of configuring the nonlinear compensation coefficient based on the pre-stored information in the communication apparatus. This helps more accurately compensate for nonlinear distortion caused by the optical module to the signal.

Using the EML modulator as an example, when the service module does not perform nonlinear compensation on the electrical signal based on the configured nonlinear compensation coefficient, the eye pattern of the electrical signal sent by the service module to the optical transmitter unit is in four-level equal-distance distribution shown in FIG. 4-1, and the optical eye pattern output by the EML modulator has a phenomenon of "a big inner eye and a small outer eye" shown in FIG. 4-2. After the service module sends the electrical signal (for example, the electrical eye pattern shown in FIG. 4-3) to the optical transmitter unit based on the configured nonlinear compensation coefficient, the optical eye pattern output by the EML modulator may achieve effect similar to that shown in FIG. 4-1, that is, the four-level equal-distance distribution. This helps improve a bit error rate by more than one order of magnitude.

In the method corresponding to FIG. 5, assuming that the optical module is connected to the service module through multiple ports, the control module may read, from the optical module, the nonlinear compensation information of the modulator of the optical transmitter unit in the optical communication component corresponding to each port, and configure, based on the obtained nonlinear compensation information, the nonlinear compensation coefficient in the electrical communication component corresponding to a corresponding port. The following describes, based on the system shown in FIG. 2 and the method shown in FIG. 5, a possible procedure in which the service module configures, based on the nonlinear compensation information of the modulator in the optical communication component i corresponding to the port i, the nonlinear compensation coefficient of the electrical communication component i corresponding to the port i.

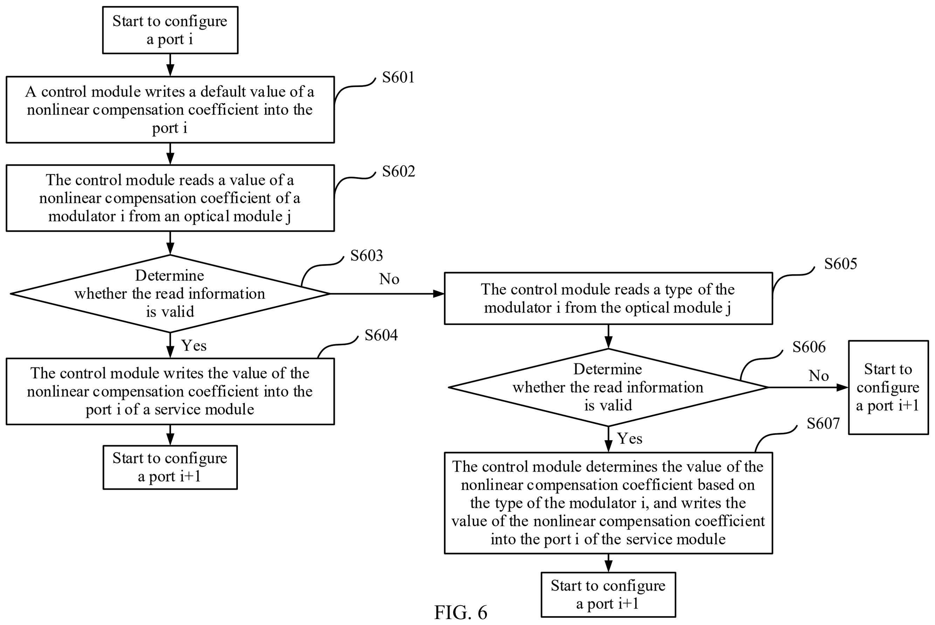

As shown in FIG. 6, the configuration procedure may include S601 to S604, or include S601 and S605 to S607, or include S601 to S607.

S601: The service module writes a default value of the nonlinear compensation coefficient into the port i.

The communication apparatus may store the default value of the nonlinear compensation coefficient before delivery, and the service module may write the default value of the nonlinear compensation coefficient into the electrical communication component i (or the transmit end equalization unit in the electrical communication component i) corresponding to the port i, as initial parameter configuration.

S602: The control module reads a value that is of the nonlinear compensation coefficient of the modulator i and that is stored in the optical module j.

The modulator in the optical communication component i in the optical module j is referred to as the modulator i. The optical module j stores the value of the nonlinear compensation coefficient of the modulator i.

After the optical module j is connected to the port i and the port i+1 of the service module, the control module may read the value that is of the nonlinear compensation coefficient of the modulator i and that is stored in the optical module j. Because the value of the nonlinear compensation coefficient required by the optical module is approximately irrelevant to an electrical link insertion loss of the communication apparatus, the value of the nonlinear compensation coefficient required by the optical module may be calibrated before the optical module is delivered from a factory, and stored at a determined location (for example, the first storage location described above) of the storage unit of the optical module.

S603: The control module determines whether the read information is valid, and if the read information is valid, performs S604, or if the read information is invalid, performs S605.

After reading information at the agreed location 1, the control module determines whether the read information is valid. If the read information is valid, the control module may perform S604. If the read information is invalid, the control module performs S605.

For the optical module for which the required value of the nonlinear compensation coefficient is not configured before delivery, the information read by the control module in S602 is a default invalid value or an incorrect data format. In this case, S605 may not be performed, but default configuration information is maintained unchanged.

S604: The control module writes the value of the nonlinear compensation coefficient into the port i of the service module.

The control module may write the read value of the nonlinear compensation coefficient into the electrical communication component i (or the transmit end equalization unit in the electrical communication component i) corresponding to the port i of the service module. Then, the control module may continue to start to configure the port i+1.

For a process of configuring the port i+1 by the control module, refer to the process of configuring the port i by the control module shown in FIG. 6. The control module is not limited to serially configuring different ports in this application. Optionally, the control module may configure different ports in parallel.

S605: The control module reads a type of the modulator i from the optical module j.

The optical module j may store information of the modulator i, and the information of the modulator i may indicate the type of the modulator i. For example, the optical module j stores the information at an agreed location (for example, the second storage location described above). The control module may read the information from the optical module j, to determine the type of the modulator i.

S606: The control module determines whether the read information is valid, and if the read information is valid, performs S607, or if the read information is invalid, starts to configure the port i+1.

After reading information at the agreed location 2, the control module determines whether the read information is valid. If the read information is valid, the control module may perform S607. If the read information is invalid, the control module starts to configure the port i+1.

For the optical module for which the information of the modulator i is not configured before delivery, the information read by the control module in S605 is a default invalid value or an incorrect data format.

S607: The control module determines the value of the nonlinear compensation coefficient based on the type of the modulator i, and writes the value of the nonlinear compensation coefficient into the port i of the service module.

After determining the value of the nonlinear compensation coefficient based on the type of the modulator i, the control module may write the read value of the nonlinear compensation coefficient into the electrical communication component i (or the transmit end equalization unit in the electrical communication component i) corresponding to the port i of the service module. Then, the control module may continue to start to configure the port i+1.

For a process of configuring the port i+1 by the control module, refer to the process of configuring the port i. For example, i in the foregoing method may be replaced with i+1, and the optical module j may be replaced with an optical module connected to the replacing port. The control module performs the foregoing method on all high-speed links of all in-position optical modules, so as to complete configuration of a transmit end equalization parameter of each port.

When the control module does not obtain the nonlinear compensation information of the modulator, the control module may send the electrical signal to the optical module based on the default value of the nonlinear compensation coefficient. This helps ensure compatibility of the communication apparatus with optical modules of different designs.

Because the optical modules of different designs generally have different transmit end equalization capabilities, the optical module may further store information (referred to as transmit end equalization capability information) for indicating a transmit end equalization capability of the optical module. After reading the transmit end equalization capability information, the control module may configure a corresponding transmit end equalization parameter based on the information. This helps implement optimal signal sending performance in the system, so as to balance better signal quality and lower power consumption.

Because the optical modules of different designs generally have different receive end equalization capabilities, the optical module may further store information (referred to as receive end equalization capability information) for indicating a receive end equalization capability of the optical module. After reading the receive end equalization capability information, the control module may configure a corresponding receive end equalization parameter based on the information. This helps implement optimal signal receiving performance in the system, so as to balance better signal quality and lower power consumption.

For the optical module in the first possible design or the third possible design described above, because the optical receiver unit is connected to the service module through the ODSP unit, and the ODSP unit has a good receive end equalization capability, it may be considered that the optical module has a weak receive end equalization capability. In this application, the optical module in this design is referred to as a strong receive end equalization optical module. For the optical module in the second possible design or the fourth possible design described above, because the optical receiver unit is not connected to the service module through the ODSP unit, but is directly connected to the service module, it may be considered that the optical communication component has a weak receive end equalization capability. In this application, the optical module in this design is referred to as a weak receive end equalization optical module.

The optical module may store the receive end equalization capability information, where the information indicates strength of the receive end equalization capability of the optical module.

For example, the information indicates that the optical module is a strong receive end equalization optical module or a weak receive end equalization optical module. Alternatively, the receive end equalization capability may be classified into a plurality of levels, and a strength relationship between receive end equalization capabilities represented by any two levels is determined. The information may indicate that the receive end equalization capability of the optical module is one of the plurality of levels.

For example, the receive end equalization capability information indicates that the optical module is the optical module in the first possible design, the optical module in the second possible design, the optical module in the third possible design, or the optical module in the fourth possible design described above.

Alternatively, the receive end equalization capability information indicates that the optical module includes the ODSP unit or does not include the ODSP unit.

Alternatively, the receive end equalization capability information indicates that the optical receiver unit in the optical module is configured to directly connect to the service module or is configured to connect to the service module through the ODSP unit.

A manner in which the optical module stores the receive end equalization capability information is not limited in this application. To facilitate the communication apparatus to obtain the receive end equalization capability information from different types of optical modules, for different types of optical modules, the receive end equalization capability information may be stored at a same storage address (referred to as a third storage address) of the storage unit.

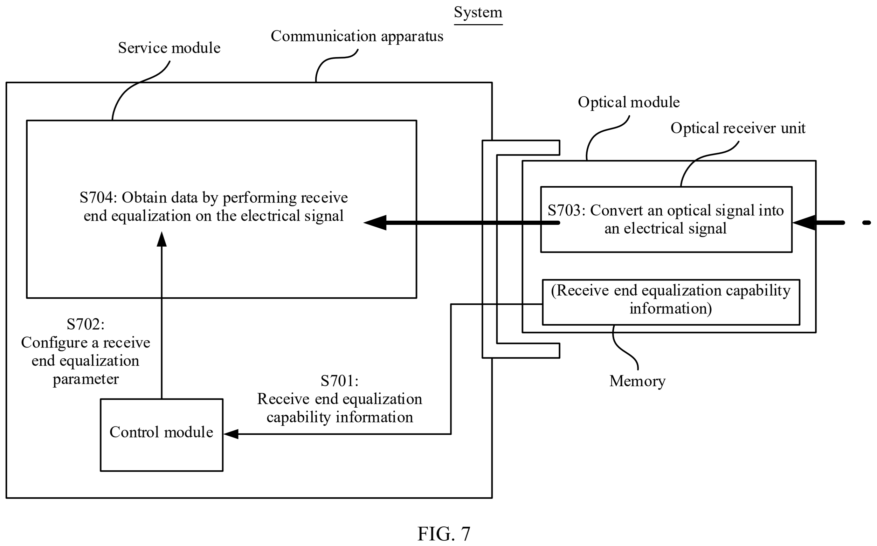

As shown in FIG. 2, the optical module may include one or more optical communication components, and each optical communication component includes one optical transmitter unit. When the optical module includes a plurality of optical communication components, receive end equalization capabilities of different optical communication components may be the same or different. Optionally, the receive end equalization capability information stored in the optical module indicates a receive end equalization capability of each optical communication component. On the basis that the storage unit of the optical module stores the receive end equalization capability information, the following describes another method provided in this application. The method may be applied to any system described above. As shown in FIG. 7, the method may include S701 to S704. In FIG. 7, a bold solid line with an arrow represents transmission of an electrical signal of a data plane, a bold dashed line with an arrow represents transmission of an optical signal of a data plane, and a non-bold solid line with an arrow represents transmission of an electrical signal of a control plane.

S701: The control module reads the receive end equalization capability information of the optical module from the storage unit of the optical module.

On the basis that the storage unit of the optical module stores the receive end equalization capability information described above, the optical module may provide the receive end equalization capability information for the control module. Correspondingly, the control module may read the receive end equalization capability information from the storage unit.

As shown in FIG. 2, assuming that the optical module is connected to the service module through the port i, the control module may read the receive end equalization capability information of the optical communication component i from the optical module.

A specific process in which the control module obtains the receive end equalization capability information from the optical module is not limited in this application. For example, the control module may obtain the receive end equalization capability information at the third storage location described above, or the optical module may actively send the receive end equalization capability information to the control module.

An occasion at which the control module obtains the receive end equalization capability information from the optical module is not limited in this application. For example, after the optical module is connected to the port i of the service module, the control module may perform S701. S702: The control module configures a receive end equalization parameter of the service module based on the receive end equalization capability information.

After obtaining the receive end equalization capability information, the control module may configure the receive end equalization parameter of the service module based on the receive end equalization capability information, so as to improve signal quality (for example, reduce a bit error rate) of the electrical signal received by the service module from the optical module, and optimize signal receiving performance of the system.

As described above, the receive end equalization capability information may indicate a receive end equalization capability of the optical module. For example, the receive end equalization capability information indicates whether to perform clock and data recovery processing on the electrical signal after indicating the optical module to convert the optical signal into the electrical signal and before the electrical signal is sent to the service module. The control module may determine the value of the receive end equalization parameter based on the receive end equalization capability information, and then write the value of the receive end equalization parameter into the service module.

The values of the receive end equalization parameters determined by the control module are generally different when the receive end equalization capabilities are different. A specific implementation in which the control module determines the value of the receive end equalization parameter based on the receive end equalization capability information is not limited in this application. For example, the control module may obtain a parameter table, where the parameter table stores the receive end equalization capability information and the value of the receive end equalization parameter in an associated manner, and the control module determines the value of the receive end equalization parameter by looking up the table. For example, the control module may input the receive end equalization capability information into an algorithm, and the algorithm may output the value of the receive end equalization parameter. An implementation of the algorithm is not limited in this application. For example, the algorithm may be a trained machine learning algorithm.

Refer to the foregoing description of the receive end equalization parameter. The receive end equalization parameter may be a parameter in the receive end equalization unit. For example, the receive end equalization parameter may include or affect but is not limited to at least one of the following: a DSP order, an FFE order, or a DFE order.

The values of the receive end equalization parameters determined by the control module are generally different when the receive end equalization capabilities of the optical module are different. For example, when the optical module has a better capability of performing receive end equalization on the electrical signal obtained through optical-to-electrical conversion, the value of the receive end equalization parameter configured by the control module may be used to reduce the capability of the service module to perform receive end equalization on the electrical signal sent by the optical module. For example, the control module may reduce an order of all or a part of the equalizers in the receive end equalization unit, so as to balance better signal quality and lower power consumption in the system. On the contrary, when the optical module has a weak capability of performing receive end equalization on the electrical signal obtained through optical-to-electrical conversion, the value of the receive end equalization parameter configured by the control module may be used to improve the capability of the service module to perform receive end equalization on the electrical signal sent by the optical module. For example, the control module may increase an order of all or a part of the equalizers in the receive end equalization unit, so as to optimize signal quality of the electrical signal received from the optical module.

As shown in FIG. 2, the receive end equalization capability information of the optical module j may indicate a receive end equalization capability of the optical communication component i, and the control module may write the value of the receive end equalization parameter into the electrical communication component i. As shown in FIG. 3-2 or FIG. 3-4, the control module may write the value of the nonlinear compensation coefficient into the receive end equalization unit in the electrical communication component i.

S703: The optical receiver unit converts the input optical signal into the electrical signal, and then sends to the service module.

After receiving the optical signal, the optical receiver unit may convert the optical signal into the electrical signal, and then send the electrical signal to the service module.

The optical module may be shown in FIG. 3-2 or FIG. 3-4. After converting the optical signal into the electrical signal, the optical module does not process the electrical signal through the ODSP unit, but directly sends the electrical signal to the port i.

Refer to the foregoing description of the optical receiver unit. The optical receiver unit may include the optical-to-electrical converter and the amplification circuit. After the optical-to-electrical converter converts the optical signal into the electrical signal, the amplification circuit may perform amplification and/or shaping processing on the electrical signal, and then send the electrical signal to the service module.

Refer to the foregoing description of the optical receiver unit. The optical receiver unit may include the optical-to-electrical converter, and does not include the amplification circuit. The optical-to-electrical converter converts the optical signal into the electrical signal, and then sends the electrical signal to the service module.

Optionally, the optical module may further include the optical transmitter unit. In the method corresponding to FIG. 7, the process in which the communication apparatus transmits the signal through the optical module is not limited in this application. Optionally, the optical module does not include the optical transmitter unit, and the communication apparatus receives a signal only through the optical module, but does not transmit a signal through the optical module.

S704: The service module obtains data by performing receive end equalization on the electrical signal based on the configured receive end equalization parameter.

After the control module configures the receive end equalization parameter of the service module, the service module may perform, based on the configured receive end equalization parameter, transmit end equalization on the electrical signal sent by the optical module, and then obtain the data from the electrical signal obtained through equalization.

A specific method for receive end equalization is not limited in this application. As described above, performing transmit end equalization on the electrical signal may include performing any one or more of the following processing on the electrical signal: filtering, suppression of intersymbol interference in the electrical signal, amplification, and the like.

For example, after the control module writes the value of the receive end equalization parameter into the receive end equalization unit in the electrical communication component i, after receiving the electrical signal from the optical communication component i through the port i, the receive end equalization unit may perform receive end equalization on the electrical signal based on the configured receive end equalization parameter, to optimize signal quality of the electrical signal, and then input the electrical signal into the service bitstream processing unit, and the service bitstream processing unit obtains the data from the electrical signal.

Because the service module of the communication apparatus is generally not connected to the optical module during sales of the communication apparatus, after purchasing the communication apparatus, a user may purchase an optical module according to a requirement and connect the optical module to the service module. Therefore, the control module configures the receive end equalization parameter of the service module based on the receive end equalization capability information stored in the optical module, instead of configuring the receive end equalization parameter based on pre-stored information in the communication apparatus. This helps implement optimal signal receiving performance in the system, so as to balance better signal quality and lower power consumption.

In the method corresponding to FIG. 7, assuming that the optical module is connected to the service module through the plurality of ports, the control module may read, from the optical module, the receive end equalization capability information of the optical communication component corresponding to each port, and configure, based on the obtained receive end equalization capability information, the receive end equalization parameter in the electrical communication component corresponding to the corresponding port.

Optionally, for the optical module in the second possible design or the third possible design described above, the optical module may store configuration information, and the configuration information includes the nonlinear compensation information of the modulator and the receive end equalization capability information.

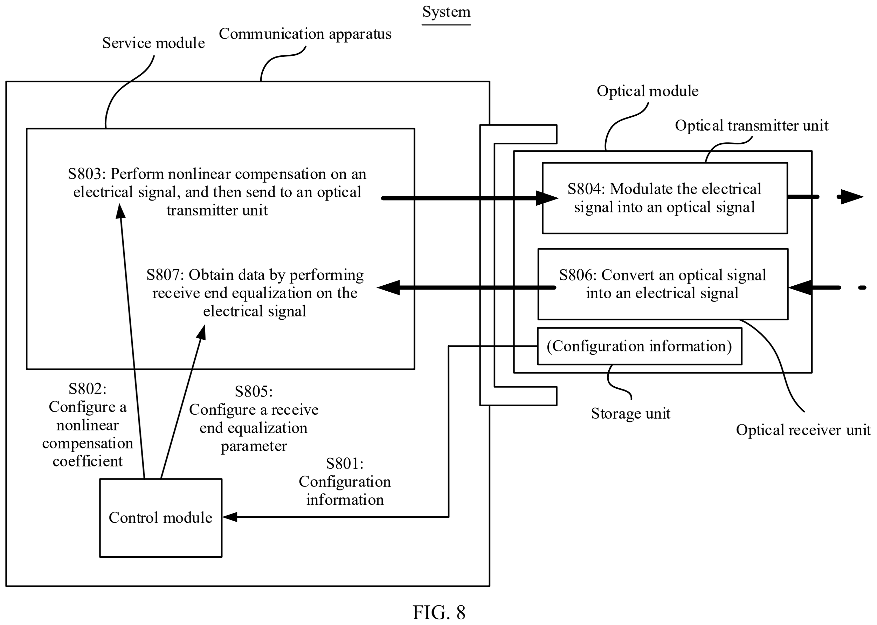

On the basis that the optical module stores the nonlinear compensation information of the modulator and the receive end equalization capability information, the following describes another method provided in this application. The method may be applied to any system described above. As shown in FIG. 8, the method may include S801 to S807. In FIG. 8, a bold solid line with an arrow represents transmission of an electrical signal of a data plane, a bold dashed line with an arrow represents transmission of an optical signal of a data plane, and a non-bold solid line with an arrow represents transmission of an electrical signal of a control plane.

S801: The control module reads the configuration information from the storage unit of the optical module.

On the basis that the storage unit of the optical module stores the configuration information described above, the optical module may provide the configuration information for the control module. Correspondingly, the control module may read the configuration information from the storage unit. The configuration information includes the nonlinear compensation information of the modulator and the receive end equalization capability information described above.

S802: The control module configures the nonlinear compensation coefficient of the service module based on the nonlinear compensation information.

S803: The service module performs nonlinear compensation on the electrical signal based on the configured nonlinear compensation coefficient, and then sends to the optical transmitter unit. S804: The optical transmitter unit converts the input electrical signal into the optical signal. S805: The control module configures a receive end equalization parameter of the service module based on the receive end equalization capability information.

S806: The optical receiver unit converts the input optical signal into the electrical signal, and then sends to the service module.

S807: The service module obtains data by performing receive end equalization on the electrical signal based on the configured receive end equalization parameter.

S803 and S804 are signal sending processes of the system, and S806 and S807 are signal receiving processes of the system. A sequence between the signal sending processes and the signal receiving processes of the system is not limited in this application. For example, the system may send a signal and receive a signal in serial or parallel.

For understanding of step S801, refer to related content of S501 and S701. For understanding of implementation processes of S802 to S804, refer to related content of S502 to S504. For understanding of implementation processes of S805 to S807, refer to related content of S702 to S704. Details are not described herein again.

Because the optical module may not be installed during sales of the system, after purchasing the communication apparatus, a user may purchase an optical module according to a requirement and connect the optical module to the service module. Therefore, the control module configures the nonlinear compensation coefficient of the service module based on the compensation information that is of the modulator and that is stored in the optical module, instead of configuring the nonlinear compensation coefficient based on the pre-stored information in the communication apparatus. This helps more accurately compensate for nonlinear distortion caused by the optical module to the signal. In addition, the control module configures the receive end equalization parameter of the service module based on the receive end equalization capability information stored in the optical module, instead of configuring the receive end equalization parameter based on pre-stored information in the communication apparatus. This helps implement optimal signal receiving performance in the system, so as to balance better signal quality and lower power consumption.

To better implement the foregoing method in this application, the following provides a related communication apparatus or device configured to implement the foregoing method.

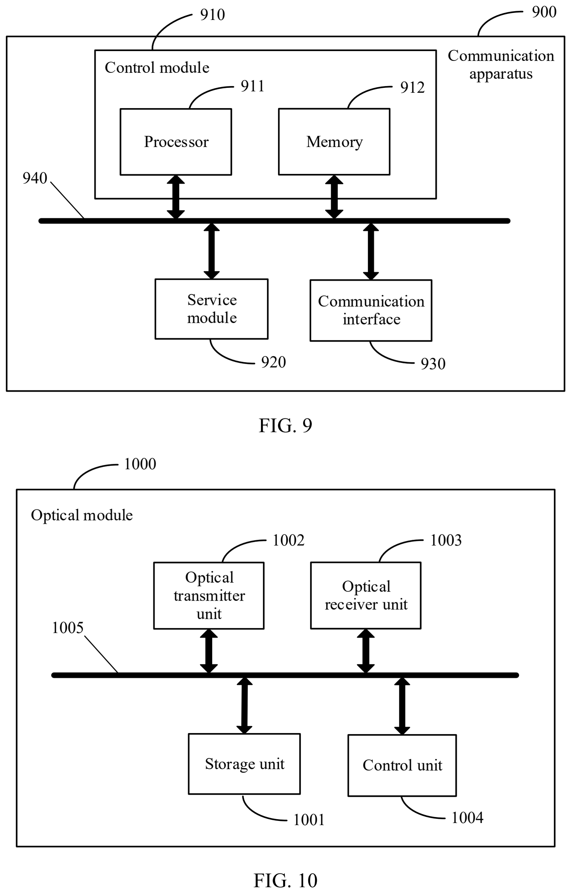

This application provides a communication apparatus 900. The communication apparatus 900 may perform any method procedure performed by the foregoing communication apparatus. For example, the communication apparatus 900 is configured to obtain nonlinear compensation information stored in an optical module, perform nonlinear compensation on an electrical signal based on the nonlinear compensation information, and then send to an optical transmitter unit in the optical module. The communication apparatus 900 may be the communication apparatus described above, or may be installed in the communication apparatus described above. Optionally, as shown in FIG. 9, the communication apparatus 900 may include but is not limited to a control module 910, a service module 920, and one or more communication interfaces 930. The control module 910 and the service module 920 are respectively configured to perform any method performed by the control module and the service module described above. For example, the control module 910 is configured to perform S501 and S502, and the service module 920 is configured to perform S503. Alternatively, the control module 910 is configured to perform S601 to S604, or perform S605 to S607, or perform S601 to S607. Alternatively, the control module 910 is configured to perform S701 and S702, and the service module 920 is configured to perform S704. Alternatively, the control module 910 is configured to perform S801, S802, and S805, and the service module 920 is configured to perform S803 and S807.

The communication interface 930 is configured to connect to the optical module. Optionally, the communication interface 930 is a wired interface, and is configured to connect to a wired link such as a cable or an optical fiber. Alternatively, optionally, the communication interface 930 is a wireless interface.

The control module 910 is connected to the communication interface 930, so as to read nonlinear compensation information of a modulator and/or receive end equalization capability information of the optical module from the optical module through the communication interface 930. The service module 920 is connected to the communication interface 930, so as to send an electrical signal to the optical module or receive an electrical signal from the optical module through the communication interface 930. The control module 910 is connected to the service module 920, so as to configure a nonlinear compensation coefficient of the service module 920 based on the nonlinear compensation information, or configure a receive end equalization parameter of the service module 920 based on the receive end equalization capability information. The control module 910 and the service module 920 may communicate with the optical module through a same communication interface or different communication interfaces 930.

A connection manner between the control module 910, the service module 920, and the communication interface 930 is not limited in this application. Optionally, the control module 910, the service module 920, and the communication interface 930 may be connected to each other through an internal bus 940. The bus 940 may be a peripheral component interconnect (peripheral component interconnect, PCI) bus, an extended industry standard architecture (extended industry standard architecture, EISA) bus, or the like. The bus 940 may be classified into an address bus, a data bus, a control bus, and the like. For ease of representation, only one thick line is used to represent the bus in FIG. 9, but this does not mean that there is only one bus or only one type of bus.

An implementation of the control module 910 is not limited in this application. For example, the control module 910 may be implemented in a form of hardware, or may be implemented in a form of a software functional unit, or may be implemented in a combination of software and hardware. In FIG. 9, an example in which the control module 910 includes a processor 911 and a memory 912 is used. The processor 911 and the memory 912 are connected to each other. Optionally, the processor 911 and the memory 912 may be connected to each other through the bus 940.

The processor 911 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 912 may include a volatile memory (volatile memory), for example, a random access memory (random access memory, RAM). The memory 912 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 912 may further include a combination of the foregoing types.

The memory 912 stores computer instructions. By executing these computer instructions, the processor 911 may perform the steps performed by the control module described above, for example, perform S501 and S502, or perform S601 to S604, or perform S605 to S607, or perform S601 to S607, or perform S701 and S702, or perform S801, S802, and S805.

An implementation of the service module 920 is not limited in this application. For example, the service module 920 may be implemented in a form of hardware, or may be implemented in a form of a software functional unit, or may be implemented in a combination of software and hardware. For example, the service module 920 may be a service chip, and the service chip includes one or more processors. A part or all of the processors are configured to read and execute a computer program stored in the memory, to perform any method procedure performed by the foregoing service module, for example, perform S503, or perform S704, or perform S803 and S807. The chip may further include an electrical communication component, and the electrical communication component may be, for example, an input/output interface, a pin, or a circuit. Optionally, the memory may be a storage unit in the chip, for example, a register or a cache. The memory may alternatively be a storage unit located outside the chip, for example, a read-only memory (read-only memory, ROM), an EEPROM, another type of static storage device that can store static information and instructions, or a random access memory (random access memory, RAM).

In FIG. 9, an example in which the processor 911 and the memory 912 are integrated into the control module 910 is used. Optionally, the control module 910 does not include the memory 912, and the memory 912 is disposed outside the control module 910. Optionally, the control module 910 and the service module 920 may share the memory.

For a method procedure and effect performed by the communication apparatus 900, refer to related content of a corresponding method. Details are not described herein again.

This application provides an optical module 1000. The optical module 1000 may store configuration information, for example, nonlinear compensation information of a modulator in the optical module 1000 and/or receive end equalization capability information of the optical module 1000. For the nonlinear compensation information of the modulator and/or the receive end equalization capability information, refer to the foregoing related content for understanding. Details are not described herein again.

The optical module 1000 may be configured to perform any method procedure performed by the foregoing optical module, and for example, is configured to provide configuration information for the communication apparatus (or the control module) described above, and configured to perform S504 or S703, or configured to perform S804 and S806. A structure of the optical module 1000 is not limited in this application. The optical module 1000 may be the optical module described above, or may be installed in the optical module described above.

Optionally, as shown in FIG. 10, the optical module 1000 may include but is not limited to a storage unit 1001, an optical transmitter unit 1002, and an optical receiver unit 1003. The storage unit 1001 stores the nonlinear compensation information of the modulator in the optical transmitter unit 1002 and the receive end equalization capability information of the optical module 1000. The optical transmitter unit is configured to perform S804, and the optical receiver unit is configured to perform S806.

In a possible example, the optical receiver unit 1003 is optional. The storage unit 1001 stores the nonlinear compensation information of the modulator in the optical module 1000. The optical transmitter unit 1002 may be connected to the service module, and is configured to perform S504. In a possible example, the optical transmitter unit 1002 is optional. The storage unit 1001 stores the receive end equalization capability information of the optical module 1000. The optical receiver unit 1003 may be connected to the service module, and is configured to perform S703.

Optionally, the optical module 1000 may further include a control unit 1004. Optionally, the control unit 1004 is configured to control the optical transmitter unit 1002 and/or the optical receiver unit 1003. Optionally, the control unit 1004 is configured to control a read operation and/or a write operation of the storage unit 1001. An implementation of the control unit 1004 is not limited in this application. For example, the control unit may be a processor or a multipoint control unit (Multipoint control unit, MCU).

A connection manner between the storage unit 1001, the optical transmitter unit 1002, the optical receiver unit 1003, and the control unit 1004 is not limited in this application. Optionally, the storage unit 1001, the optical transmitter unit 1002, the optical receiver unit 1003, and the control unit 1004 may be connected to each other through an internal bus 1005. The bus 1005 may be a peripheral component interconnect (peripheral component interconnect, PCI) bus, an extended industry standard architecture (extended industry standard architecture, EISA) bus, or the like.

A deployment location of the storage unit 1001 is not limited in this application. For example, the storage unit 1001 may be integrated into the control unit 1004. A type of the storage unit 1001 is not limited in this application. Optionally, the storage unit 1001 may be a storage unit in the chip, for example, a register or a cache. The storage unit 1001 may alternatively be a storage unit located outside the chip, for example, a read-only memory (read-only memory, ROM), an EEPROM, another type of static storage device that can store static information and instructions, or a random access memory (random access memory, RAM).

A structure of the optical transmitter unit 1002 or the optical receiver unit 1003 is not limited in this application. For example, the optical transmitter unit 1002 may include the modulator. Optionally, the optical transmitter unit 1002 may further include a drive circuit. The optical receiver unit 1003 may include an optical-to-electrical converter. Optionally, the optical receiver unit 1003 may further include an amplification circuit. The optical transmitter unit 1002 or the optical receiver unit 1003 may be understood with reference to the corresponding units shown in FIG. 3-1.

Optionally, the optical transmitter unit 1002 is configured to directly connect to the communication apparatus or the service module. Optionally, the optical receiver unit 1003 is configured to directly connect to the communication apparatus or the service module.

Optionally, the optical module 1000 may further include more units. For example, the optical module 1000 may further include the ODSP unit shown in FIG. 3-3 or FIG. 3-4.

For a specific implementation and effect of the optical module 1000, refer to related content of a corresponding method. Details are not described herein again.

This application provides a system. The system may be any system described above or disposed in any optical system described above. The system may include a communication apparatus 900 and one or more optical modules 1000.

The module or unit division described in FIG. 9 or FIG. 10 is merely an example, and is merely logical function division. There may be other division manners in actual implementation. For example, a plurality of modules or units may be combined or integrated into another system, or some features may be ignored or not performed. Functional modules or units in the communication apparatus or the optical module may be integrated together, or may exist alone physically, or two or more modules or units are integrated together.

This application further provides an optical network. The optical network may include one or more systems described above, and different systems may be communicatively connected through an optical interconnection network. The optical network may be shown in FIG. 1-1 or FIG. 1-2. The at least one optical communication device in FIG. 1-1 or FIG. 1-2 may be the system described above, or the system described above may be deployed in the at least one optical communication device in FIG. 1-1 or FIG. 1-2. The optical interconnection network may include one or more optical links (for example, an optical fiber), and may further include one or more optical switching devices.

This application further provides a computer-readable storage medium. The computer-readable storage medium stores a computer program. When the computer program is executed by a processor, some or all of the steps recorded in any one of the foregoing method examples may be implemented. The computer-readable storage medium may be any available medium accessible to a general-purpose or special-purpose computer. An example of the present invention further provides a computer program. The computer program includes instructions. When the computer program is executed by a computer, the computer is enabled to perform some or all of the steps in any one of the foregoing method examples. Persons of ordinary skill in the art may understand that the computer-readable storage medium includes any non-transitory (non-transitory) machine-readable medium that can store program code, for example, a USB flash drive, a removable hard disk, a magnetic disk, an optical disc, a RAM, an SSD, or a non-volatile memory (non-volatile memory).

The apparatuses provided in embodiments of this application may be configured to perform the foregoing corresponding example methods. Therefore, for technical effects that can be achieved by the apparatus examples in this application, refer to the technical effects achieved by the foregoing corresponding method examples. Details are not described herein again.

It may be clearly understood by persons skilled in the art that, for the purpose of convenient and brief description, for a detailed working process of the foregoing systems, apparatuses, and units, refer to a corresponding process in the foregoing method examples. Details are not described herein again. "A and/or B" in examples of this application may be understood as including two solutions: "A and B" and "A or B". In the specification, claims, and accompanying drawings of this application, the terms "first", "second", "third", "fourth", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in examples of this application.

In the several examples provided in this application, it should be understood that the disclosed module, apparatus, or device may be implemented in other manners. For example, the described apparatus example is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A system, wherein the system comprises a communication apparatus and an optical module, the communication apparatus comprises a service module and a control module, the optical module comprises a storage unit and an optical transmitter unit, the optical transmitter unit comprises a modulator, and the optical transmitter unit is directly connected to the service module;
the storage unit is configured to store nonlinear compensation information of the modulator;
the control module is configured to read the nonlinear compensation information from the storage unit, and configure a nonlinear compensation coefficient of the service module based on the nonlinear compensation information;
the service module is configured to perform nonlinear compensation on an electrical signal based on the configured nonlinear compensation coefficient, and then send to the optical transmitter unit; and
the modulator is configured to modulate the electrical signal input to the optical transmitter unit into an optical signal.

2. The system according to claim 1, wherein the nonlinear compensation information indicates a value of the nonlinear compensation coefficient, or the nonlinear compensation information indicates a type of the modulator and/or a vendor of the optical module.

3. The system according to claim 1 or 2, wherein the nonlinear compensation coefficient comprises at least one of the following parameters of the electrical signal: a level amplitude, a relative amplitude of an inner eye and an outer eye, an eye skew, and an eye height.

4. The system according to any one of claims 1 to 3, wherein the optical module further comprises an optical receiver unit, and the optical receiver unit is directly connected to the service module;
the optical receiver unit is configured to convert a received optical signal into an electrical signal, and then send to the service module; and
the service module is configured to obtain data from the electrical signal obtained through conversion.

5. The system according to any one of claims 1 to 3, wherein the optical module further comprises an optical receiver unit and an optical digital signal processing ODSP unit, and the ODSP unit is directly connected to the service module;
the optical receiver unit is configured to convert a received optical signal into an electrical signal, and then input to the ODSP unit;
the ODSP unit is configured to perform clock and data recovery on the electrical signal, and then send to the service module; and
the service module is configured to obtain data from an electrical signal obtained through recovery.

6. A communication apparatus, wherein the communication apparatus comprises a control module and a service module, the service module is configured to directly connect to an optical transmitter unit in an optical module, the optical module comprises a storage unit and the optical transmitter unit, the optical transmitter unit comprises a modulator, and the storage unit stores nonlinear compensation information of the modulator;
the control module is configured to read the nonlinear compensation information from the storage unit, and configure a nonlinear compensation coefficient of the service module based on the nonlinear compensation information; and
the service module is configured to perform nonlinear compensation on an electrical signal based on the configured nonlinear compensation coefficient, and then send to the optical transmitter unit.

7. The communication apparatus according to claim 6, wherein the nonlinear compensation information indicates a value of the nonlinear compensation coefficient, or the nonlinear compensation information indicates a type of the modulator and/or a vendor of the optical module.

8. The communication apparatus according to claim 6 or 7, wherein the nonlinear compensation coefficient comprises at least one of the following parameters of the electrical signal: a level amplitude, a relative amplitude of an inner eye and an outer eye, an eye skew, and an eye height.

9. An optical module, wherein the optical module comprises a storage unit and an optical transmitter unit, the optical transmitter unit comprises a modulator, and the optical transmitter unit is configured to directly connect to a communication apparatus;
the storage unit is configured to store nonlinear compensation information of the modulator; and
the modulator is configured to modulate an electrical signal input to the optical transmitter unit into an optical signal, wherein the electrical signal is an electrical signal obtained by performing nonlinear compensation based on the nonlinear compensation information.

10. The optical module according to claim 9, wherein the nonlinear compensation information indicates a value of the nonlinear compensation coefficient, or the nonlinear compensation information indicates a type of the modulator and/or a vendor of the optical module.

11. The optical module according to claim 9 or 10, wherein the nonlinear compensation coefficient comprises at least one of the following parameters of the electrical signal: a level amplitude, a relative amplitude of an inner eye and an outer eye, an eye skew, and an eye height.

12. The optical module according to any one of claims 9 to 11, wherein the optical module further comprises an optical receiver unit, and the optical receiver unit is directly connected to the communication apparatus; and
the optical receiver unit is configured to convert a received optical signal into an electrical signal, and then send to the communication apparatus.

13. The optical module according to any one of claims 9 to 11, wherein the optical module further comprises an optical receiver and an optical digital signal processing ODSP unit, and the ODSP unit is directly connected to the communication apparatus;
the optical receiver unit is configured to convert a received optical signal into an electrical signal, and then input to the ODSP unit; and
the ODSP unit is configured to perform clock and data recovery on the electrical signal, and then send to the communication apparatus.

14. A method, wherein the method is applied to a system, the system comprises a communication apparatus and an optical module, the communication apparatus comprises a service module and a control module, the optical module comprises a storage unit and an optical transmitter unit, the optical transmitter unit comprises a modulator, the optical transmitter unit is directly connected to the service module, the storage unit stores nonlinear compensation information of the modulator, and the method comprises:
reading, by the control module, the nonlinear compensation information from the storage unit, and configuring a nonlinear compensation coefficient of the service module based on the nonlinear compensation information;
performing, by the service module, nonlinear compensation on an electrical signal based on the configured nonlinear compensation coefficient, and then sending to the optical transmitter unit; and
modulating, by the modulator, the electrical signal input to the optical transmitter unit into an optical signal.

15. The method according to claim 14, wherein the nonlinear compensation information indicates a value of the nonlinear compensation coefficient, or the nonlinear compensation information indicates a type of the modulator and/or a vendor of the optical module.

16. The method according to claim 14 or 15, wherein the nonlinear compensation coefficient comprises at least one of the following parameters of the electrical signal: a level amplitude, a relative amplitude of an inner eye and an outer eye, an eye skew, and an eye height.

17. The method according to any one of claims 14 to 16, wherein the optical module further comprises an optical receiver unit, the optical receiver unit is directly connected to the service module, and the method further comprises:
converting, by the optical receiver unit, a received optical signal into an electrical signal, and then sending to the service module; and
obtaining, by the service module, data from the electrical signal obtained through conversion.

18. The method according to any one of claims 14 to 16, wherein the optical module further comprises an optical receiver unit and an optical digital signal processing ODSP unit, the ODSP unit is directly connected to the service module, and the method further comprises:
converting, by the optical receiver unit, a received optical signal into an electrical signal, and then inputting to the ODSP unit;
performing, by the ODSP unit, clock and data recovery on the electrical signal, and then sending to the service module; and
obtaining, by the service module, data from an electrical signal obtained through recovery.

19. A method, wherein the method is applied to a communication apparatus, the communication apparatus comprises a control module and a service module, the service module is configured to directly connect to an optical transmitter unit in an optical module, the optical module comprises a storage unit and the optical transmitter unit, the optical transmitter unit comprises a modulator, the storage unit stores nonlinear compensation information of the modulator, and the method comprises:
reading, by the control module, the nonlinear compensation information from the storage unit, and configuring a nonlinear compensation coefficient of the service module based on the nonlinear compensation information; and
performing, by the service module, nonlinear compensation on an electrical signal based on the configured nonlinear compensation coefficient, and then sending to the optical transmitter unit.

20. The method according to claim 19, wherein the nonlinear compensation information indicates a value of the nonlinear compensation coefficient, or the nonlinear compensation information indicates a type of the modulator and/or a vendor of the optical module.

21. The method according to claim 19 or 20, wherein the nonlinear compensation coefficient comprises at least one of the following parameters of the electrical signal: a level amplitude, a relative amplitude of an inner eye and an outer eye, an eye skew, and an eye height.

22. A method, wherein the method is applied to an optical module, the optical module comprises a storage unit and an optical transmitter unit, the optical transmitter unit comprises a modulator, the optical transmitter unit is configured to directly connect to a communication apparatus, the storage unit stores nonlinear compensation information of the modulator, and the method comprises:
providing the nonlinear compensation information for the communication apparatus; and
modulating an electrical signal input to the optical transmitter unit into an optical signal, wherein the electrical signal is an electrical signal obtained by performing nonlinear compensation based on the nonlinear compensation information.

23. The method according to claim 22, wherein the nonlinear compensation information indicates a value of the nonlinear compensation coefficient, or the nonlinear compensation information indicates a type of the modulator and/or a vendor of the optical module.

24. The method according to claim 22 or 23, wherein the nonlinear compensation coefficient comprises at least one of the following parameters of the electrical signal: a level amplitude, a relative amplitude of an inner eye and an outer eye, an eye skew, and an eye height.

25. The method according to any one of claims 22 to 24, wherein the optical module further comprises an optical receiver unit, the optical receiver unit is directly connected to the communication apparatus, and the method further comprises:
the optical receiver unit converts a received optical signal into an electrical signal, and then sends to the communication apparatus.

26. The method according to any one of claims 22 to 24, wherein the optical module further comprises an optical receiver and an optical digital signal processing ODSP unit, the ODSP unit is directly connected to the communication apparatus, and the method further comprises:
converting, by the optical receiver unit, a received optical signal into an electrical signal, and then inputting to the ODSP unit; and
performing, by the ODSP unit, clock and data recovery on the electrical signal, and then sending to the communication apparatus.

27. An optical network, comprising one or more systems, wherein at least one system in the one or more systems is as described in any one of claims 1 to 5, and different systems in the one or more systems are connected through an optical interconnection network.
